# EUROPÄISCHE PATENTSCHRIFT

(11) **EP 4 048 053 B1**
(45) Veröffentlichungstag und Bekanntmachung des Hinweises auf die Patenterteilung: **12.02.2025**
(21) Anmeldenummer: 20796557.5
(22) Anmeldetag: 21.10.2020
(51) Int. Cl.: A01C 23/00, A01B 73/00, A01B 73/04, A01B 73/06

(54) **VORRICHTUNG ZUM AUSBRINGEN EINES PUMPFÄHIGEN MEDIUMS**
DEVICE FOR DISPENSING A PUMPABLE MEDIUM
DISPOSITIF POUR DISTRIBUER UN MILIEU POMPABLE

(30) Priorität: 24.10.2019 DE 202019105922 U
(43) Veröffentlichungstag der Anmeldung: 31.08.2022
(73) Patentinhaber: Vogelsang GmbH & Co. KG, 49632 Essen (DE)
(72) Erfinder: BERLING, Sebastian, 49632 Essen (DE); HEUER, Georg, 49632 Essen (DE); VOGELSANG, Hugo, 49632 Essen (DE)
(74) Vertreter: Eisenführ Speiser
(86) Internationale Anmeldenummer: PCT/EP2020/079636
(87) Internationale Veröffentlichungsnummer: WO 2021/078802

(56) Entgegenhaltungen:
- EP-A1- 3 017 698
- DE-A1- 102015 103 664
- DE-A1- 102015 114 663
- DE-A1- 19 709 065
- DE-U1- 20 004 150
- DE-U1- 202006 008 173
- DE-U1- 202016 100 457

## Beschreibung

Die Erfindung betrifft eine Vorrichtung zum Ausbringen eines pumpfähigen Mediums, insbesondere eines Düngemittels wie Gülle, auf einen Streifen einer landwirtschaftlichen Nutzfläche und eine Verteileranordnung zum Ausbringen eines pumpfähigen Mediums, insbesondere eines Düngemittels wie Gülle, auf einen Streifen einer landwirtschaftlichen Nutzfläche. Die Erfindung betrifft ferner ein Verfahren zum Einstellen einer Transportposition ausgehend von einer Betriebsposition für eine Vorrichtung zum Ausbringen eines pumpfähigen Mediums, insbesondere eines Düngemittels wie Gülle, auf einen Streifen einer landwirtschaftlichen Nutzfläche.

Derartige Vorrichtungen werden vorzugsweise dazu eingesetzt, Düngemittel wie Gülle bodennah und streifenförmig auf einen Streifen einer landwirtschaftlichen Nutzfläche auszubringen. Zur bodennahen, streifenförmigen Ausbringung von Gülle werden beispielsweise Schleppschlauchgestänge oder Schleppschuhgestänge verwendet. Dabei wird ein Düngemittel aus einem Behälter wie einem Tank oder Fass - vorzugsweise über einen Exaktverteiler - in mehrere Schläuche befördert und über diese Schläuche beispielsweise direkt über möglichst nah über dem Boden geführte Schlauchöffnungen oder über spezielle Auslässe, insbesondere in Form von Schleppschuhen, ausgebracht.

Aus der DE 20 2006 008 173 U1 ist eine Dosiereinrichtung für flüssige Düngemittel bekannt, umfassend ein Gestell, einen um eine im Wesentlichen waagerecht angeordnete Gestelldrehachse zwischen einem hochgeklappten Transportstand und einem heruntergeklappten Arbeitsstand schwenkbar mit dem Gestell verbundenen Dosierarm und mehrere mit dem Dosierarm verbundene Ausfuhrorgane für flüssigen Dünger.

Aus der DE 10 2015 103 664 A1 ist eine Vorrichtung zur Ausbringung von Flüssigdünger auf landwirtschaftlich genutzte Flächen, mit einem fahrbaren Tank und einem an den Tank angeschlossenen Leitungssystem, welches den Flüssigdünger aus dem Tank zu einer Mehrzahl von Mündungsöffnungen leitet, bekannt. Dabei sind die Mündungsöffnungen an einem Traggestänge gehalten, das aus einer Transportstellung in eine Arbeitsstellung klappbar ist. Des Weiteren ist aus der DE 10 2017 009 830 A1 eine Vorrichtung zum Ausbringen von Stoffgemischen zur landwirtschaftlichen Boden- und/oder Pflanzenbearbeitung bekannt, mit einem Traggestänge, das zumindest drei miteinander verbundene Teilsegmente aufweist und die beiden äußeren Teilsegmente mit dem ihnen jeweils benachbarten innen angeordneten Teilsegment über eine Kombination von zwei beweglichen Verbindungen verbunden ist.

Grundsätzlich können solche vorbekannten Vorrichtungen bei der Ausbringung auf plane Flächen sicherstellen, dass jeder der mehreren Auslässe bodennah angeordnet ist und somit eine exakte und emissionsarme Ausbringung erreicht wird. Bei vorbekannten Vorrichtungen solcher Art tritt jedoch das Problem auf, dass bei unterschiedlichen und veränderlichen Bodenkonturen keine optimale Anpassung der Position der einzelnen Auslässe an die jeweilige Bodenkontur für eine gleichmäßige und emissionsarme Ausbringung des Düngemittels aus den Auslässen erreicht wird sondern stattdessen einzelne Auslässe zu weit vom Boden entfernt sind und hierdurch Düngemittelverluste und Emissionen verursachen oder der Abstand so gering ist, dass ein Abschnitt des Schleppschlauchs über den Boden gezogen wird und hierdurch Schaden nehmen kann.

Dieses Problem wird bei großen Arbeitsbreiten noch verstärkt, also wenn die Erstreckung der Ausbringvorrichtung quer zur Fahrtrichtung, mit der die Breite des Streifens definiert wird, groß ist, da hierdurch Boden mit sehr unterschiedlichen Konturverläufen von der Arbeitsbreite erfasst werden. Große Arbeitsbreiten sind jedoch erwünscht, um die Anzahl der Fahrten bzw. Streifen, die erforderlich sind, um die Ausbringung auf einer landwirtschaftlichen Nutzfläche vollständig durchzuführen, dadurch verringert werden kann.

Es ist daher die Aufgabe der vorliegenden Erfindung eine Vorrichtung zum Ausbringen eines pumpfähigen Mediums, insbesondere eines Düngemittels wie Gülle, auf einen Streifen einer landwirtschaftlichen Nutzfläche bereitzustellen, welche bei unterschiedlichen Bedingungen, insbesondere bei unterschiedlichen und veränderlichen Bodenkonturen, und bei unterschiedlichen Arbeitshöhen eine optimale Anpassung der Auslässe an die jeweilige Bodenkontur, für eine gleichmäßige Ausbringung des Düngemittels aus den Auslässen, auch bei großen Arbeitsbreiten ermöglicht.

Erfindungsgemäß wird diese Aufgabe durch eine Vorrichtung mit den Merkmalen des Anspruchs 1 gelöst. Die erfindungsgemäße Vorrichtung zum Ausbringen eines pumpfähigen Mediums, insbesondere eines Düngemittels wie Gülle, auf einen Streifen einer landwirtschaftlichen Nutzfläche, umfassend einen Hinterrahmenhalter mit einer Hinterrahmenhalterschnittstelle zur Befestigung an einem Hinterrahmen eines Behälters, insbesondere an einem Güllefass; einen Tragrahmen, der um eine erste Rotationsachse, die sich in einer Querrichtung erstreckt, drehbar an dem Hinterrahmenhalter gelagert ist; einen ersten Ausleger , der sich in einer Betriebsposition in der Querrichtung erstreckt und mit dem Tragrahmen verbunden und um eine zweite Rotationsachse drehbar an dem Tragrahmen gelagert ist; einen an dem ersten Ausleger befestigten ersten Seitenarm, der sich in einer Seitenarmlängsrichtung erstreckt und an dem mehrere entlang des ersten Seitenarms angeordnete Schleppschlauchausleger angeordnet sind, die voneinander in der Seitenarmlängsrichtung beabstandet sind und an ihren Enden jeweils eine Austrittsöffnung aufweisen; wobei der erste Seitenarm zwischen der Betriebsposition, in welcher der erste Seitenarm sich in der Querrichtung erstreckt und die Schleppschlauchausleger sich ausgehend von dem ersten Seitenarm nach unten erstrecken, und einer Transportposition, in welcher der erste Seitenarm sich in einer quer zur Querrichtung liegenden Längsrichtung erstreckt und die Schleppschlauchausleger sich ausgehend von dem ersten Seitenarm nach oben erstrecken, wobei die erste und die zweite Rotationsachse so verlaufen, dass die Verstellung zwischen der Betriebsposition und der Transportposition durch eine Rotation des Tragrahmens um die erste Rotationsachse mit einem ersten Winkelbetrag und eine durch Rotation des ersten Auslegers um die zweite Rotationsachse mit einem zweiten Winkelbetrag erfolgt, verstellbar ist, ist dadurch gekennzeichnet, dass die zweite Rotationsachse in der Betriebsposition horizontal angeordnet ist.

Die Seitenarmlängsrichtung erstreckt sich in der Betriebsposition vorzugsweise in der Querrichtung. Die Vorrichtung wird vorzugsweise entlang eines Streifens einer landwirtschaftlichen Nutzfläche, insbesondere in Richtung der Längsrichtung, zum Ausbringen eines pumpfähigen Mediums bewegt, sodass sich der ausgebrachte Streifen in Längsrichtung erstreckt und die Seitenarmlängsrichtung quer dazu in Querrichtung liegt. Der Hinterrahmenhalter ist vorzugsweise ausgebildet, um mit einer Hinterrahmenschnittstelle zur Befestigung an einem Hinterrahmen oder an mehreren Verbindungspunkten eines Behälters verbunden zu werden. Vorzugsweise ist die Position des Hinterrahmenhalterss zu einem Hinterrahmen oder anderen Verbindungspunkten eines Behälters veränderbar. Die erste Rotationsachse verläuft in einer Querrichtung, wobei die Querrichtung quer zur Längsrichtung verläuft, wobei der Winkel zwischen Querrichtung und Längsrichtung vorzugsweise 80°-100° und besonders bevorzugt ca. 90° +/- 5° beträgt. Unter dem ersten Ausleger ist vorzugsweise ein Auslegerarm zu verstehen, der mit dem Tragrahmen verbunden ist und um eine zweite Rotationsachse drehbar an dem Tragrahmen gelagert ist. An dem ersten Ausleger kann der erste Seitenarm direkt oder indirekt verbunden sein. Unter Schleppschlauchausleger sind beispielsweise Schleppschuhausleger mit Schleppschuhen oder Schleppschlauchausleger mit Schleppschläuchen zu verstehen. Die Austrittsöffnungen der Schleppschlauchausleger können beispielsweise als Schleppschuhe oder als Schlauchenden oder in anderer Form ausgebildet sein. Die Schleppschlauchausleger haben einen Abstand zu den jeweils benachbarten Schleppschlauchauslegern von vorzugsweise 125 mm - 350 mm und insbesondere ca. 250 mm. Die Schleppschlauchausleger können in Längsrichtung des Auslegers und/oder in Längsrichtung des ersten Seitenarms angeordnet sein. In der Betriebsposition kann pumpfähiges Medium, insbesondere ein Düngemittel wie Gülle, ausgebracht werden. In der Betriebsposition ist der erste Seitenarm quer zur Längsrichtung bzw. in Querrichtung angeordnet. Die Schleppschlauchausleger sind in der Betriebsposition vorzugsweise unterhalb des ersten Seitenarms angeordnet. In der Transportposition ist der erste Seitenarm in der Längsrichtung angeordnet. Dabei erstrecken sich die Schleppschlauchausleger nach oben, sodass in der Transportposition keine Flüssigkeit aus den Austrittsöffnungen austritt. Eine Verstellung zwischen der Transportposition und der Betriebsposition erfolgt mittels einer Rotation des Tragrahmens um die erste Rotationsachse mit einem ersten Winkelbetrag und einer Rotation des ersten Auslegers um eine zweite Rotationsachse mit einem zweiten Winkelbetrag. Die zweite Rotationsachse verläuft in der Betriebsposition in einer horizontalen Richtung, vorzugsweise in Längsrichtung. Die zweite Rotationsachse verläuft in der Transportposition vorzugsweise in vertikaler Richtung.

Ein erster Vorteil, der durch die horizontale Anordnung der zweiten Rotationsachse in der Betriebsposition erreicht wird, liegt darin, dass der Winkel zwischen dem ersten Seitenarm und dem Boden bzw. der Winkel zwischen den Schleppschlauchauslegern und dem Boden konstant eingestellt werden kann, unabhängig von der Stellung des ersten Auslegers und unabhängig von der Bodenkontur. Insbesondere bleibt bei Verwendung von Schleppschuhen der Winkel dieser Schleppschuhe zum Boden konstant, so dass eine ideale Ausbringung unabhängig von der Stellung des ersten Auslegers und unabhängig von der Bodenkontur erreicht wird. Ein weiterer Vorteil liegt darin, dass außerdem unabhängig von der Höhe, in der die Vorrichtung an einem Behälter montiert ist, stets eine konstante Winkellage der Schleppschlauchausleger bzw. des ersten Seitenarms ermöglicht wird. Weiterhin weißt die erfindungsgemäße Vorrichtung den Vorteil auf, dass eine Rotation des ersten Auslegers um die zweite Rotationsachse sowohl zur Verstellung zwischen der Betriebsposition und der Transportposition verwendet werden kann, als auch zur Höhenverstellung des ersten Seitenarms, beispielsweise zur Anpassung der Austrittsöffnungen an die Bodenkontur.

Durch die Verschwenkung des Tragrahmens um die erste Rotationsachse wird die am Tragrahmen angeordnete zweite Rotationsachse ebenfalls verschwenkt, dies erfolgt vorzugsweise um den gleichen Winkelbetrag wie die Verschwenkung des Tragrahmens. Die erste Rotationsachse liegt sowohl in der Betriebsposition als auch in der Transportposition vorzugsweise in einer Ebene, die parallel oder in einem Winkel von weniger als 10° geneigt zu einer Ebene verläuft, in der die zweite Rotationsachse liegt. Die erste Rotationsachse liegt sowohl in der Betriebsposition als auch in der Transportposition vorzugsweise senkrecht zur zweiten Rotationsachse oder in einem Winkel von 80°-100°.

In einer besonders bevorzugten Ausführungsform ist vorgesehen, dass die Vorrichtung einen Auslegeraktuator umfasst, der ein erstes und ein zweites Ende aufweist, wobei das erste Ende mit dem Tragrahmen verbunden und um eine erste Auslegeraktuatorrotationsachse drehbar gelagert ist und das zweite Ende mit dem ersten Ausleger verbunden und um eine zweite Auslegeraktuatorrotationsachse drehbar gelagert ist, wobei der Auslegeraktuator angeordnet ist, um durch Aus- und Einfahren des Auslegeraktuators eine Rotation des ersten Auslegers um die zweite Rotationsachse zu bewirken, und damit in der Betriebsposition den ersten Seitenarm in vertikaler Richtung zu verstellen, und den ersten Ausleger zwischen der Transportposition und der Betriebsposition durch Ein- bzw. Ausfahren des Auslegeraktuators um den zweiten Winkelbetrag um die zweite Rotationsachse zu verschwenken, wobei der zweite Winkelbetrag vorzugsweise 80° bis 120°, besonders bevorzugt 93° - 103° und insbesondere ca. 98° beträgt.

Der Auslegeraktuator ist vorzugsweise ausgebildet als Linearzylinder, insbesondere als Hydraulikzylinder. Es können auch zwei oder mehrere Auslegeraktuatoren neben einander angeordnet sein. Die Verbindung des ersten Endes des Auslegeraktuators mit dem Tragrahmen kann beispielsweise mittels eines Gelenks hergestellt werden. Die Verbindung des zweiten Endes des Auslegeraktuators mit dem ersten Ausleger kann beispielsweise mittels eines Gelenks hergestellt werden. Durch die Anordnung des Auslegeraktuators ergibt sich der Vorteil, dass der Auslegeraktuator eine Doppelfunktion erfüllt, indem durch Ein- und Ausfahren des Auslegeraktuators eine vertikale Verstellung des ersten Seitenarms sowie ein Verstellen zwischen Transport- und Betriebsposition bewirkt werden kann.

Gemäß einer weiter bevorzugten Ausführungsform ist vorgesehen, dass die Vorrichtung einen Tragrahmenaktuator umfasst, der ein erstes und ein zweites Ende aufweist, wobei das erste Ende mit dem Hinterrahmenhalter verbunden und um eine erste Tragrahmenaktuatorrotationsachse drehbar gelagert ist und das zweite Ende mit dem Tragrahmen verbunden und um eine zweite Tragrahmenaktuatorrotationsachse drehbar gelagert ist, wobei der Tragrahmenaktuator angeordnet ist, um durch Ein- und Ausfahren des Tragrahmenaktuators eine Rotation des Tragrahmens um die erste Rotationsachse zu bewirken und damit den Tragrahmen zwischen der Transportposition und der Betriebsposition durch Ein- bzw. Ausfahren des Tragrahmenaktuators um den ersten Winkelbetrag um die erste Rotationsachse zu verschwenken, wobei der erste Winkelbetrag vorzugsweise 80° bis 120°, besonders bevorzugt 85° - 95° und insbesondere ca. 90° beträgt.

Vorzugsweise wird dabei der Tragrahmen um ca. 90° verschwenkt, sodass die zweite Rotationsachse in der Betriebsposition horizontal und in der Transportposition vertikal angeordnet ist. Der Tragrahmenaktuator ist vorzugsweise ausgebildet als Linearzylinder, insbesondere als Hydraulikzylinder. Es können auch zwei oder mehrere Tragrahmenaktuatoren neben einander angeordnet sein.

Erfindungsgemäß ist vorgesehen, dass die Vorrichtung einen Seitenarmaktuator umfasst, der ein erstes und ein zweites Ende aufweist, wobei das erste Ende mit dem ersten Ausleger verbunden ist und um eine erste Seitenarmaktuatorrotationsachse drehbar gelagert ist und das zweite Ende mit dem ersten Seitenarm verbunden und um eine zweite Seitenarmaktuatorrotationsachse drehbar gelagert ist, wobei der Seitenarmaktuator angeordnet ist, um durch Ein- und Ausfahren des Seitenarmaktuators eine Rotation des Seitenarms um eine dritte Rotationsachse, die sich parallel zum ersten Seitenarm erstreckt, zu bewirken und damit den ersten Seitenarm zwischen der Transportposition und der Betriebsposition durch Ein- und Ausfahren des Seitenarmaktuators um die dritte Rotationsachse um einen dritten Winkelbetrag zu verschwenken, wobei der dritte Winkelbetrag vorzugsweise 45° - 90°, besonders bevorzugt 60° - 75° und insbesondere 65° - 70° beträgt.

Dabei verläuft die dritte Rotationsachse in der Betriebsposition vorzugsweise in Querrichtung. Der Seitenarmaktuator ist vorzugsweise ausgebildet als Linearzylinder, insbesondere als Hydraulikzylinder. Bei einer Rotation des ersten Seitenarms um die dritte Rotationsachse um 65° sind die Schleppschlauchausleger in der Transportposition vorzugsweise vertikal angeordnet, liegen also solcherart, dass aus den Schleppschlauchauslegern keine Restflüssigkeit durch Schwerkraft austreten kann. Bei einer Rotation des ersten Seitenarms um die dritte Rotationsachse um 70° sind die Schleppschlauchausleger in der Transportposition vorzugsweise um ca. 5° in Richtung des Behälters geneigt.

Gemäß einer weiter bevorzugten Ausführungsform ist vorgesehen, dass der erste Seitenarm um eine Pendelrotationsachse, die parallel zur zweiten Rotationsachse verläuft, drehbar an dem Ausleger gelagert ist.

Dabei verläuft die Pendelrotationsachse in der Betriebsposition vorzugsweise in Längsrichtung. Der erste Seitenarm ist damit vorzugsweise mittels einer Pendelaufhängung an dem ersten Ausleger befestigt. Vorzugsweise ist an dem ersten Seitenarm ein Rad befestigt oder sind an dem ersten Seitenarm mehrere, insbesondere zwei, Räder befestigt, die den gleichen Abstand zur Pendelrotationsachse aufweisen. Das Rad bzw. die Räder dienen dabei dazu, einen Teil des Gewichts des Auslegers auf dem Boden abzustützen und einen weitestgehend konstanten Bodenabstand des Auslegers im Betriebsmodus zu gewährleisten. Dabei ist das Rad bzw. sind die Räder vorzugsweise angeordnet, um ein Einstellen des Abstands zwischen dem ersten Seitenarm und dem Boden zu erzielen und/oder bei Verwendung eines Schleppschuhgestänges eine Anpresskraft von den Kufen der Schleppschuhe auf den Boden zu bewirken.

Gemäß einer weiter bevorzugten Ausführungsform ist vorgesehen, dass die Vorrichtung gekennzeichnet ist durch einen Pendelrahmen, der den ersten Seitenarm mit dem ersten Ausleger schwenkbar verbindet, insbesondere an mindestens zwei Positionen mit dem ersten Seitenarm und mittels einer drehbaren Verbindung mit dem ersten Ausleger verbunden ist oder umgekehrt.

Gemäß einer weiter bevorzugten Ausführungsform ist vorgesehen, dass das erste Ende des Seitenarmaktuators mit dem ersten Ausleger verbunden ist, indem das erste Ende des Seitenarmaktuators drehbar um die erste Seitenarmaktuatorrotationsachse mit dem Pendelrahmen gekoppelt ist und der Pendelrahmen drehbar um die Pendelrotationsachse mit dem ersten Seitenarm oder dem ersten Ausleger gekoppelt ist.

Dabei ist vorzugsweise der Pendelrahmen drehbar um die Pendelrotationsachse mit dem ersten Seitenarm gekoppelt. Alternativ kann jedoch auch der Pendelrahmen drehbar um die Pendelrotationsachse mit dem ersten Ausleger gekoppelt sein.

Gemäß einer weiter bevorzugten Ausführungsform ist vorgesehen, dass die Vorrichtung einen Pendelrahmenaktuator umfasst, der ein erstes und ein zweites Ende aufweist, wobei das erste Ende mit dem ersten Ausleger verbunden und um eine erste Pendelrahmenaktuatorrotationsachse drehbar gelagert ist und das zweite Ende mit dem Pendelrahmen verbunden und um eine zweite Pendelrahmenaktuatorrotationsachse drehbar gelagert ist, wobei der Pendelrahmenaktuator angeordnet ist, um durch Ein- und Ausfahren des Pendelrahmenaktuators eine Rotation des Pendelrahmens, und vorzugsweise des ersten Seitenarms, um die Pendelrotationsachse zu bewirken.

Der Pendelrahmenaktuator ist vorzugsweise ausgebildet als Linearzylinder, insbesondere als Hydraulikzylinder. Durch Ein- und Ausfahren des Pendelrahmenaktuators kann der Pendelrahmen und damit der erste Seitenarm um die Pendelrotationsachse relativ zum ersten Ausleger bewegt werden.

Gemäß einer weiter bevorzugten Ausführungsform ist vorgesehen, dass die Vorrichtung eine Steuerungsvorrichtung umfasst, die signaltechnisch mit dem Auslegeraktuator und dem Tragrahmenaktuator und vorzugsweise dem Seitenarmaktuator und vorzugsweise dem Pendelrahmenaktuator verbunden ist und ausgebildet ist, um ein Ein- und Ausfahren des Auslegeraktuators und des Tragrahmenaktuators und vorzugsweise des Seitenarmaktuators und vorzugsweise des Pendelrahmenaktuator unabhängig voneinander zu steuern.

Gemäß einer weiter bevorzugten Ausführungsform ist vorgesehen, dass die Steuerungsvorrichtung ausgebildet ist, um den Auslegeraktuator in einer Schwimmsteuerungsschaltung so anzusteuern, dass eine Gewichtskraft des Auslegers und des daran montierten Seitenarms und der daran gewichtskraftausübend montierten Bauteile kompensiert wird, und die Steuerungsvorrichtung vorzugsweise ausgebildet ist, um den Pendelrahmenaktuator in einer Schwimmsteuerungsschaltung so anzusteuern, dass eine Gewichtskraft des Seitenarms und der daran gewichtskraftausübend montierten Bauteile kompensiert wird.

Dabei wird die Gewichtskraft des Auslegers und des daran montierten Seitenarms und der daran gewichtskraftausübend montierten Bauteile kompensiert, indem sich eine näherungsweise, einstellbare Anpresskraft für die Auslassöffnungen, vorzugsweise für die Schleppschuhe, ergibt. Um im Betrieb ein Pendeln des ersten Seitenarms zu ermöglichen, kann der Pendelrahmenaktuator in eine Schwimmsteuerungsschaltung angesteuert werden. Vorzugsweise sind berührende oder berührungslose Sensoren zur Abtastung der Bodenkontur mit der Steuerungsvorrichtung signaltechnisch verbunden, wobei die Sensoren die Bodenkontur erfassen, wodurch eine Verstellung des ersten Seitenarms und/oder des ersten Auslegers und/oder des Pendelrahmens erfolgen kann.

Gemäß einer weiter bevorzugten Ausführungsform ist vorgesehen, dass sich der Schwerpunkt des ersten Seitenarms und/oder der Schwerpunkt des ersten Seitenarms mit den daran gewichtskraftausübend montierten Bauteilen in der Betriebsposition unterhalb der Pendelrotationsachse befindet.

Die am Seitenarm gewichtskraftausübend montierten Bauteile umfassen vorzugsweise die Verteilervorrichtung, die Schleppschlauchausleger und die Leitungen. Die Anordnung des Schwerpunkts des ersten Seitenarms mit den daran gewichtskraftausübend montierten Bauteilen in der Betriebsposition verhindert eine Instabilität beim Pendeln und sorgt dafür, dass sich beim Pendeln der erste Seitenarm automatisch in eine stabile Position bewegt.

Gemäß einer weiter bevorzugten Ausführungsform ist vorgesehen, dass die zweite Rotationsachse in der Transportposition in einer vertikalen Richtung verläuft.

Dabei ist vorzugsweise die zweite Rotationsachse in der Transportposition vertikal angeordnet. Durch diese Anordnung ist eine Rotation um die zweite Rotationsachse zum Verstellen zwischen Transportposition und Betriebsposition mit sehr geringem Kraftaufwand möglich.

Gemäß einer weiter bevorzugten Ausführungsform ist vorgesehen, dass die Vorrichtung einen zweiten Auslegeraktuator umfasst, der ein erstes und ein zweites Ende aufweist, wobei das erste Ende mit dem Tragrahmen verbunden und um eine Achse, die parallel zur ersten Auslegeraktuatorrotationsachse angeordnet ist, drehbar gelagert ist und das zweite Ende mit dem ersten Ausleger verbunden und um eine Achse, die parallel zur zweiten Auslegeraktuatorrotationsachse angeordnet ist, drehbar gelagert ist, wobei der zweite Auslegeraktuator angeordnet ist, um durch Aus- und Einfahren des Auslegeraktuators eine Rotation des ersten Auslegers um die zweite Rotationsachse zu bewirken.

Der zweite Auslegeraktuator ist vorzugsweise ausgebildet als Linearzylinder, insbesondere als Hydraulikzylinder. Gemäß dieser Ausführungsform sind zwei Auslegeraktuatoren neben einander angeordnet.

Gemäß einer weiter bevorzugten Ausführungsform ist vorgesehen, dass die Vorrichtung eine erste Verteilervorrichtung, mit einer Einlassöffnung und mehreren Auslassöffnungen, die mit dem ersten Seitenarm verbunden ist und vorzugsweise in der Richtung entlang des ersten Seitenarms mittig an dem ersten Seitenarm angeordnet ist; eine Zuführleitung, die ein erstes Ende und ein zweites Ende aufweist, wobei das erste Ende ausgebildet ist zur Verbindung mit einer Versorgungsöffnung und das zweite Ende mit der Einlassöffnung der Verteilervorrichtung verbunden ist; umfasst, wobei die Zuführleitung entlang des ersten Auslegers an dem ersten Ausleger befestigt ist und/oder von dem ersten Ausleger umschlossen ist und/oder durch den als Hohlprofil ausgeführten ersten Ausleger gebildet wird.

Die erste Verteilervorrichtung ist vorzugsweise ausgebildet als Exaktverteiler. Mittels der ersten Verteilervorrichtung kann ein auszubringendes Medium gleichmäßig auf Leitungen verteilt werden, so dass eine gleichmäßige Ausbringung über die Auslassöffnungen erfolgen kann. Es können auch mehrere Verteilervorrichtungen, insbesondere zwei Verteilervorrichtungen, mit dem ersten Seitenarm verbunden sein.

Gemäß einer weiter bevorzugten Ausführungsform ist vorgesehen, dass die Vorrichtung mehrere Leitungen umfasst, vorzugsweise ausgebildet als flexible Rohre, wobei die Leitungen jeweils ein erstes Ende und ein zweites Ende aufweisen, wobei jeweils die ersten Enden mit den Auslassöffnungen der Verteilervorrichtung und die zweiten Enden mit den Schleppschlauchauslegern verbunden sind.

Dabei können die Leitungen als flexible oder nicht flexible Rohre ausgebildet sein. Die Leitungen weisen dabei vorzugsweise in etwa die gleiche Länge auf. Somit kann auch beim Starten und Beenden der Ausbringung eine gleichmäßige und synchrone Ausbringung aus den Auslassöffnungen erreicht werden. Die Auslassöffnungen sind dabei vorzugsweise ausgebildet als Schleppschuhe oder als einfache Schlauchenden.

Gemäß einer weiter bevorzugten Ausführungsform ist vorgesehen, dass der erste Ausleger mehrere Auslegerarmabschnitte umfasst, die teleskopartig angeordnet und relativ zueinander verschiebbar sind, sodass die Länge des ersten Auslegers veränderbar ist.

Die teleskopartige Anordnung kann beispielsweise mittels einer Teleskopschienenführung erreicht werden. Unter teleskopartiger Anordnung ist zu verstehen, dass die Auslegerarmabschnitte ineinander verschiebbar sind und/oder in parallel zueinander angeordneten Ebenen verschiebbar sind. Vorzugsweise ist die Länge des ersten Auslegers mittels eines Aktuators, vorzugsweise ausgebildet als Linearzylinder, insbesondere als Hydraulikzylinder, veränderbar.

Gemäß einer weiter bevorzugten Ausführungsform ist vorgesehen, dass die Vorrichtung ein erstes Endsegment, das mit dem ersten Seitenarm verbunden und um eine erste Endsegmentrotationsachse drehbar an dem ersten Seitenarm gelagert ist, und vorzugsweise ein zweites Endsegment, das mit dem ersten Endsegment verbunden und um eine zweite Endsegmentrotationsachse drehbar an dem ersten Endsegment gelagert ist, und vorzugsweise ein drittes Endsegment, das mit dem ersten Seitenarm verbunden und um eine dritte Endsegmentrotationsachse drehbar an dem ersten Seitenarm gelagert ist, umfasst.

Dabei erfolgt die Verstellung des ersten Endsegments und/oder des zweiten Endsegments und/oder des dritten Endsegments vorzugsweise durch einen Aktuator, der vorzugsweise als Linearzylinder, insbesondere als Hydraulikzylinder, ausgebildet ist. Alternativ kann die Verstellung des ersten Endsegments und/oder des zweiten Endsegments und/oder des dritten Endsegments vorzugsweise manuell verstellt werden. Die sich in der Betriebsposition außen befindlichen Endsegmente können mit einem Anfahrschutz ausgestattet sein. Vorzugsweise kann die Vorrichtung weitere Endsegmente umfassen.

Gemäß einer weiter bevorzugten Ausführungsform ist vorgesehen, dass die Vorrichtung einen Endsegmentaktuator umfasst, der ein erstes und ein zweites Ende aufweist, wobei das erste Ende mit dem ersten Seitenarm verbunden und um eine erste Endsegmentaktuatorrotationsachse drehbar gelagert ist und das zweite Ende mit dem ersten Endsegment und/oder dem zweite Endsegment verbunden und um eine zweite Endsegmentaktuatorrotationsachse drehbar gelagert ist, wobei der Endsegmentaktuator angeordnet ist, um durch Ein- und Ausfahren des Endsegmentaktuators eine Rotation des ersten Endsegments und/oder des zweiten Endsegments um eine vierte Endsegmentrotationsachse zu bewirken. Die vierte Endsegmentrotationsachse ist dabei vorzugsweise parallel zur dritten Rotationsachse angeordnet.

Dadurch können die eingeklappten Endsegmente vom Boden weggeschwenkt werden, um in der Betriebsposition nicht mit den Schleppschlauchauslegern und/oder dem Boden in Kontakt zu kommen.

Gemäß einer weiter bevorzugten Ausführungsform ist vorgesehen, dass die Vorrichtung einen Sensor umfasst, der an dem ersten Seitenarm oder an einem Schleppschlauchausleger befestigt ist, zur Abtastung der Bodenkontur, wobei der Sensor ausgebildet ist die empfangenen Daten an die Steuerungsvorrichtung zu senden und die Steuerungsvorrichtung ausgebildet ist, um den Auslegeraktuator so anzusteuern, dass der erste Seitenarm in einem konstanten Abstand zur Bodenkontur geführt wird.

Dabei ist die Steuerungsvorrichtung vorzugsweise ausgebildet, um den Seitenarmaktuator und/oder den Pendelrahmenaktuator anzusteuern. Der konstante Abstand zur Bodenkontur ist dabei vorzugsweise ein Minimalabstand zwischen Auslassöffnungen und dem Boden und/oder ein durchschnittlicher Abstand über die Länge des Seitenarms zwischen den Auslassöffnungen und dem Boden. Die Vorrichtung kann auch mehrere Sensoren umfassen, die an dem ersten Seitenarm oder an einem oder mehreren Schleppschlauchauslegern befestigt sind, zur Abtastung der Bodenkontur, wobei die Sensoren ausgebildet sind, um die Sensordaten an die Steuerungsvorrichtung zu senden und die Steuerungsvorrichtung ausgebildet ist, um den Auslegeraktuator in Abhängigkeit dieser Sensordaten anzusteuern, insbesondere solcherart, dass der erste Seitenarm in einem konstanten Abstand zur Bodenkontur geführt wird.

Gemäß einer weiter bevorzugten Ausführungsform ist vorgesehen, dass die Vorrichtung umfasst: einen zweiten Ausleger, der mit dem Tragrahmen verbunden und um eine vierte Rotationsachse, die parallel zur zweiten Rotationsachse angeordnet ist, drehbar an dem Tragrahmen gelagert ist; einen an dem zweiten Ausleger befestigten zweiten Seitenarm, an dem mehrere entlang des zweiten Seitenarms angeordnete Schleppschlauchausleger angeordnet sind, die voneinander in einer Längsrichtung des Auslegers beabstandet sind und an ihren Enden jeweils eine Austrittsöffnung aufweisen; wobei der zweite Seitenarm zwischen der Betriebsposition, in welcher der zweite Seitenarm sich in der Querrichtung erstreckt und die Schleppschlauchausleger sich ausgehend von dem zweiten Seitenarm nach unten erstrecken, und der Transportposition, in welcher der zweite Seitenarm sich in der Längsrichtung erstreckt und die Schleppschlauchausleger sich ausgehend von dem zweiten Seitenarm nach oben erstrecken, wobei die vierte Rotationsachse so verläuft, dass die Verstellung zwischen der Betriebsposition und der Transportposition durch Rotation des zweiten Auslegers um die vierte Rotationsachse mit dem zweiten Winkelbetrag erfolgt, verstellbar ist, wobei die vierte Rotationsachse in der Betriebsposition horizontal angeordnet ist.

Gemäß dieser Ausführungsform sind zwei Ausleger und zwei Seitenarme etc. vorgesehen, die vorzugsweise symmetrisch in Bezug auf den Tragrahmen angeordnet sind. Dabei sind vorzugsweise sämtliche Aktuatoren unabhängig voneinander steuerbar. Dadurch wird erreicht, dass die beiden Ausleger, die beiden Seitenarme und alle weiteren steuerbaren Bauteile, die auf beiden Seiten vorhanden sind, unabhängig voneinander steuerbar sind und so auf jeder Seite in der Betriebsposition eine unabhängige Anpassung der Bodenkontur erreicht wird. Die vierte Rotationsachse verläuft dabei analog zur zweiten Rotationsachse in der Betriebsposition horizontal. Vorzugsweise verläuft die vierte Rotationsachse in der Transportposition vertikal.

Gemäß einem weiteren Aspekt der vorliegenden Erfindung wird die eingangs genannte Aufgabe gelöst durch eine Verteileranordnung zum Ausbringen eines pumpfähigen Mediums, insbesondere eines Düngemittels wie Gülle, auf einen Streifen einer landwirtschaftlichen Nutzfläche umfassend ein Fahrzeug, insbesondere ein Selbstfahrer mit einem Behälter oder ein Zugfahrzeug mit einem mit dem Zugfahrzeug verbundenen Anhänger mit einem Behälter; einen an dem Behälter montierten Hinterrahmen; und eine Vorrichtung, die an dem Hinterrahmen montiert ist.

Gemäß einem weiteren Aspekt der vorliegenden Erfindung wird die eingangs genannte Aufgabe gelöst durch ein Verfahren zum Einstellen einer Transportposition ausgehend von einer Betriebsposition für eine Vorrichtung nach einem der Ansprüche 1-20 zum Ausbringen eines pumpfähigen Mediums, insbesondere eines Düngemittels wie Gülle, auf einen Streifen einer landwirtschaftlichen Nutzfläche, wobei sich der Streifen in einer Längsrichtung erstreckt, wobei die Vorrichtung umfasst: einen Hinterrahmenhalter mit einer Hinterrahmenhalterschnittstelle zur Befestigung an einem Hinterrahmen eines Behälters, insbesondere an einem Güllefass; einen Tragrahmen, der um eine erste Rotationsachse, die sich in einer Querrichtung quer zur Längsachse erstreckt, drehbar an dem Hinterrahmenhalter gelagert ist; einen ersten Ausleger, der mit dem Tragrahmen verbunden und um eine zweite Rotationsachse drehbar an dem Tragrahmen gelagert ist; einen an dem ersten Ausleger befestigten ersten Seitenarm, an dem mehrere entlang des ersten Seitenarms angeordnete Schleppschlauchausleger angeordnet sind, die voneinander in einer Längsrichtung des Auslegers beabstandet sind und an ihren Enden jeweils eine Austrittsöffnung aufweisen; mit den Schritten:
a) Rotieren des Tragrahmes um die erste Rotationsachse mit einem Winkelbetrag von vorzugsweise 80° bis 120°, besonders bevorzugt 85° - 95° und insbesondere ca. 90°;
b) Rotieren des ersten Auslegers um die zweite Rotationsachse mit einem Winkelbetrag von vorzugsweise 80° bis 120°, besonders bevorzugt 93° - 103° und insbesondere ca. 98°;
wobei Schritt a) vor Schritt b) erfolgt.

Durch Rotieren des ersten Tragrahmens gemäß Schritt a) wird der Tragrahmen mit dem daran verbundenen ersten Ausleger hochgeklappt, vorzugsweise derart, dass die zweite Rotationsachse von einer horizontalen in eine vertikale Position verstellt wird. Anschließend wird gemäß Schritt b) der erste Ausleger an den Behälter geklappt. Vorzugsweise wird in der Transportposition der erste Ausleger mittels einer Fangvorrichtung, die an dem Behälter montiert ist, derart fixiert, dass der erste Ausleger nicht vom Behälter abgeschwenkt werden kann, vorzugsweise indem die Rotationsbewegung des ersten Auslegers um die zweite Rotationsachse blockiert wird, und/oder der erste Ausleger in vertikaler Richtung von der Fangvorrichtung gehalten wird.

Gemäß einer bevorzugten Ausführungsform erfolgt das Verfahren, wobei der erste Seitenarm um eine dritte Rotationsachse drehbar an dem ersten Ausleger gelagert ist, mit dem Schritt:
c) Rotieren des ersten Seitenarms um die dritte Rotationsachse mit einem Winkelbetrag von vorzugsweise 45° - 90°, besonders bevorzugt 60° - 75° und insbesondere 65° - 70°;
wobei vorzugsweise Schritt c) nach Schritt a) und vor Schritt b) erfolgt.

Durch eine derartige Rotation des ersten Seitenarms um die dritte Rotationsachse wird der erste Seitenarm mit den daran verbundenen Bauteilen in Richtung des Behälters geschwenkt. Vorzugsweise sind die Schleppschlauchausleger nach einer Rotation um die dritte Rotationsachse mit einem Winkelbetrag von 65° in vertikaler Richtung nach oben weisend ausgerichtet und/oder nach einer Rotation um die dritte Rotationsachse mit einem Winkelbetrag von 70° in Richtung des Behälters geneigt, beispielsweise mit einer Neigung um ca. 5° zur vertikalen Richtung. Der Schritt c) erfolgt dabei vorzugsweise zwischen Schritt a) und Schritt b). Alternativ kann der Schritt c) nach Schritt b) erfolgen.

Gemäß einer bevorzugten Ausführungsform erfolgt das Verfahren mit dem Schritt:
d) Rotieren des ersten Auslegers um die zweite Rotationsachse, die horizontal angeordnet ist, mit einem Winkelbetrag von vorzugsweise 1° bis 30°, besonders bevorzugt 5° - 20° und insbesondere ca. 10°;
wobei Schritt d) vor Schritt a) erfolgt.

Mit dem Schritt d) werden durch eine Rotation des ersten Auslegers um die zweite Rotationsachse zunächst die Schleppschlauchausleger von dem Boden abgehoben, um anschließend ohne eine Einwirkung des Bodens oder am Boden befindlicher Pflanzen oder Gegenstände die Schritte a) und b) und vorzugsweise Schritt c) ausführen zu können. Es ergibt sich folglich eine erste bevorzugte Einklappreihenfolge d) - a) - c) - b).

Alternativ zu dieser Klappreihenfolge kann auch ausgehend von der Betriebsposition in einem ersten Schritt zunächst der Seitenarm um eine etwa horizontal und in Querrichtung verlaufende Achse relativ zum Ausleger geklappt werden, sodass die Schleppschuhe verschwenkt und angehoben angehoben werden. Hierdurch wird mittels eines rasch ausführbaren Klappvorgangs eine Vorgewendestellung erreicht, in der ein Fahrzeug oder Änhänger, an dem das erfindungsgemäße Schleppschuhgestänge montiert ist, manövriert und gewendet werden kann, ohne dass hierbei noch Flüssigkeit aus den Schleppschuhen austritt und ohne dass die Schleppschuhe noch im Bodenkontakt sind. Gegebenfalls kann, um die Schleppschuhe in eine tropfsichere Stellung zu bringen, noch der Tragrahmen um die erste, horizontal verlaufende Achse um wenige Grad, beispielsweise zehn Grad hochgeklappt werden.

Hierauffolgend kann dann der Tragrahmen um die erste, horizontal verlaufende Achse relativ zum Hinterrahmenhalter geklappt werden, sodass der Tragrahmen mitsamt dem ersten Ausleger und dem daran befestigten Seitenarm geklappt wird und die zweite Rotationsachse zwischen Tragrahmen und Ausleger aus einer etwa horizontalen Verlaufsrichtung in eine etwa senkrechte Verlaufsrichtung geklappt wird.

Abschließend wird dann bei dieser alternativen Klappreihenfolge der Ausleger mitsamt dem daran befestigten Seitenarm um die nun vertikal verlaufende zweite Achse eingeklappt, um das Schleppschuhgestänge in die Transportposition anliegend an dem Behälter, bzw. mit Erstreckung des Seitenarms und des Auslegers in Fahrzeuglängsrichtung, zu bringen.

Gegebenenfalls kann das Einklappen des Auslegers auch zur Verbesserung der Manövrierfähigkeit auf engem Raum erfolgen. Dabei reicht es oftmals, wenn nur der kurvenäu-ßere Seitenarm eingeklappt wird, um ein kollisionsgefährliches Ausschwenken des Seitenarms bei einer Wendung zu verhindern, sofern dies die dadurch versursachte Schwerpunktverschiebung zulässt, ohne ein Kippen des Fahrzeugs zu riskieren. Für aufwendigere Manövriervorgänge oder um die Kippstabilität vollständig beizubehalten können jedoch auch die Ausleger beidseits eingeklappt werden.

Auch bei dieser zuvor beschriebenen alternativen Methode zur Einklappung sollte vorteilhaft in einem dem ersten Schritt vorangehenden Vorbereitungsschritt der Ausleger um die zweite, in Betriebsposition etwa horizontal verlaufende Rotationsachse nach oben geklappt werden in eine Position, in welche der Ausleger etwa horizontal liegt. Hierdurch wird der Seitenarm mit den daran befindlichen Schleppschuhen angehoben und die Schleppschuhe dadurch vom Boden abgehoben. Dies ist vorteilhaft, um bei nachfolgenden Verschwenkungen des Seitenarms einen unerwünschten Kontakt zwischen den Schleppschuhen und dem Boden oder am Boden befindlichen Hindernissen zu vermeiden.

Es ergibt sich folglich eine bevorzugte alternative Einklappreihenfolge d) - c) - a) - b).

Grundsätzlich erfolgt das Ausklappen in umgekehrter Reihenfolge, also bei der erstgenanten Vorgehensweise mit Klappungen analog zu b): Ausleger um etwa vertikale Achse ausklappen - c): Seitenarm um etwa horizontale Achse herunterklappen - a): Tragrahmen um etwa horizontale Achse herunterklappen - d) Ausleger mit Seitenarm um etwa horizontale Achse herunterklappen und Schleppschuhenden dadurch auf Boden absenken. Bei der bevorzugten alternativen Vorgehensweise erfolgt das Ausklappen mit Klappungen analog zu b): Ausleger um etwa vertikale Achse ausklappen - a): Tragrahmen um etwa horizontale Achse runterklappen - c) Seitenarm um etwa horizontale Achse ausklappen - d) Ausleger mit Seitenarm um etwa horizontale Achse herunterklappen und Schleppschuhenden dadurch auf Boden absenken. Die erstgenannte Klappreihenfolge eignet sich dabei insbesondere für Schleppschuhgestänge mit kleinerer Ausbringbreite, die alternative zweitgenannte Klappreihenfolge bewirkt bei Schleppschuhgestängen mit großer Ausbringbreite ein mechanisch schonendes Absenken der Schleppschuhe auf den Boden mit Vermeidung von unerwünschten Kontakten der Schleppschuhenden mit dem Boden während der Klappvorgänge b), a) und c).

Bevorzugte Ausführungsformen der Erfindung werden beispielhaft anhand der beiliegenden Figuren erläutert. Es zeigen:
- Figur 1a:: Eine perspektivische Ansicht der Vorrichtung, an einem Fasswagen, in der Betriebsposition;
- Figur 1b:: Eine perspektivische Ansicht der Vorrichtung mit Rädern, an einem Fasswagen, in der Betriebsposition;
- Figur 2a:: Detailansicht der Vorrichtung im Bereich des Pendelrahmens;
- Figur 2b:: Detailansicht der Vorrichtung, im Bereich des Pendelrahmenaktuators;
- Figur 3a:: Detailansicht der Vorrichtung im Bereich vom äußeren Ende des ersten Seitenarms;
- Figur 3b:: Detailansicht der Vorrichtung im Bereich des Tragrahmens;
- Figur 4:: Rückansicht der Vorrichtung in der Betriebsposition;
- Figur 5a:: Rückansicht der Vorrichtung bei nach außen hin ansteigender Bodenkontur;
- Figur 5b:: Rückansicht der Vorrichtung bei nach außen hin abfallender Bodenkontur;
- Figur 5c:: Rückansicht der Vorrichtung mit angehobenem ersten Seitenarm;
- Figur 6a:: Rückansicht und Seitenansicht der Vorrichtung mit voll ausgefahrenem Seitenarm;
- Figur 6b:: Rückansicht und Seitenansicht der Vorrichtung, wobei ein äußeres Teilsegment des ersten Seitenarms eingefahren ist;
- Figur 6c:: Rückansicht und Seitenansicht der Vorrichtung, wobei zwei äußere Teilsegmente des ersten Seitenarms eingefahren sind;
- Figur 7a:: Seitenansicht der Vorrichtung, wobei der Tragrahmen und der erste Seitenarm in Betriebsposition sind;
- Figur 7b:: Seitenansicht der Vorrichtung, wobei der Tragrahmen aus der Betriebsposition um ca. 90° verschwenkt wurde und der erste Seitenarm nicht verschwenkt wurde;
- Figur 7c:: Seitenansicht der Vorrichtung, wobei der Tragrahmen aus der Betriebsposition um ca. 90° verschwenkt wurde und der erste Seitenarm um ca. 65° verschwenkt wurde;
- Figur 8a:: Draufsicht der Vorrichtung, montiert an einem Fasswagen, wobei der Tragrahmen aus der Betriebsposition um ca. 90° verschwenkt wurde und der erste Seitenarm um ca. 65° verschwenkt wurde;
- Figur 8b:: Draufsicht der Vorrichtung, montiert an einem Fasswagen, in der Transportposition;
- Figur 8c:: Perspektivische Ansicht der Vorrichtung, montiert an einem Fasswagen, in der Transportposition.

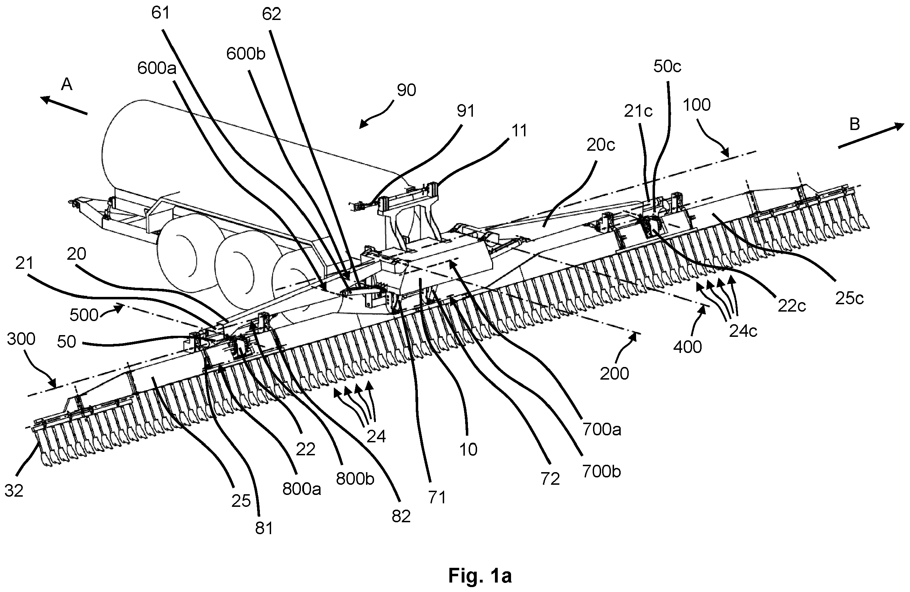

Figur 1a zeigt eine perspektivische Ansicht der Vorrichtung, wobei die Vorrichtung an einem Hinterrahmen 91 eines Fasswagens 90 befestigt werden kann. Ein solcher Fasswagen 90 kann beispielsweise mit einem Düngemittel wie Gülle befüllt werden. An dem Hinterrahmen 91 des Fasswagens 90 ist über eine Hinterrahmenhalterschnittstelle ein Hinterrahmenhalter 11 befestigt. An dem Hinterrahmenhalter 11 ist ein Tragrahmen 10 befestigt, wobei der Tragrahmen 10 drehbar an dem Hinterrahmenhalter 11 gelagert ist, sodass der Tragrahmen 10 um eine erste Rotationsachse 100 drehbar ist. Eine Rotation des Tragrahmens 10 um die erste Rotationsachse 100 wird durch Ein- und Ausfahren des ersten Tragrahmenaktuators 71 und des zweiten Tragrahmenaktuators 72 bewirkt. Dabei sind in der gezeigten Ausführungsform der erste und der zweite Tragrahmenaktuator 71, 72 jeweils als Hydraulikzylinder ausgebildet. Der erste und der zweite Tragrahmenaktuator 71, 72 sind dabei beide jeweils mit einem ersten Ende mit dem Hinterrahmenhalter 11 verbunden und um eine erste Tragrahmenaktuatorrotationsachse 700b drehbar gelagert und mit einem zweiten Ende mit dem Tragrahmen 10 verbunden und um eine zweite Tragrahmenaktuatorrotationsachse 700a drehbar gelagert. Durch ein Ein- und Ausfahren der Tragrahmenaktuatoren 71, 72 wird eine Rotation des Tragrahmens 10 um die erste Rotationsachse 100 bewirkt, womit der Tragrahmen 10 zwischen einer Transportposition und einer Betriebsposition durch Ein- bzw. Ausfahren der Tragrahmenaktuatoren 71, 72 um die erste Rotationsachse 100 verschwenkt werden kann. Dabei wird zwischen der Transportposition und der Betriebsposition vorzugsweise eine Rotation des Tragrahmens 10 um die erste Rotationsachse 100 um ca. 90° ausgeführt. In der in Figur 1a gezeigten Betriebsposition ist die erste Rotationsachse 100 in Querrichtung B und somit quer zur Längsrichtung A bzw. der Fahrtrichtung angeordnet.

Mit dem Tragrahmen 10 ist ein ersterer Ausleger 20 verbunden und um eine zweite Rotationsachse 200 drehbar an dem Tragrahmen 10 gelagert. Eine Rotation des ersten Auslegers 20 um die zweite Rotationsachse 200 wird durch Ein- und Ausfahren des ersten Auslegeraktuators 61 und des zweiten Auslegeraktuators 62 bewirkt. Dabei sind in der gezeigten Ausführungsform der erste und der zweite Auslegeraktuator 61, 62 jeweils als Hydraulikzylinder ausgebildet. Der erste und der zweite Auslegeraktuator 61, 62 sind dabei beide jeweils mit einem ersten Ende mit dem Tragrahmen 10 verbunden und um eine erste Auslegeraktuatorrotationsachse 600b drehbar gelagert und mit einem zweiten Ende mit dem ersten Ausleger 20 verbunden und um eine zweite Auslegeraktuatorrotationsachse 600a drehbar gelagert. Durch ein Ein- und Ausfahren der Auslegeraktuatoren 61, 62 wird eine Rotation des ersten Auslegers 20 um die zweite Rotationsachse 200 bewirkt. Damit kann der erste Ausleger 20 zum einen eine Höhenanpassung des ersten Seitenarms und aller daran befindlicher Bauteile bewirken und zum anderen kann der erste Ausleger 20 zwischen einer Transportposition und einer Betriebsposition durch Ein- bzw. Ausfahren der Auslegeraktuatoren 61, 62 um die zweite Rotationsachse 200 verschwenkt werden. Dabei wird zwischen der Transportposition und der Betriebsposition vorzugsweise eine Rotation des ersten Auslegers 20 um die zweite Rotationsachse 200 um ca. 98° ausgeführt. In der in Figur 1a gezeigten Betriebsposition ist die zweite Rotationsachse 200 parallel zur Längsrichtung A bzw. der Fahrtrichtung und senkrecht zur ersten Rotationsachse 100 angeordnet.

Mit dem ersten Ausleger 20 ist ein Pendelrahmen 50 verbunden und um eine Pendelrotationsachse 500 drehbar an dem ersten Ausleger 20 gelagert. Die Pendelrotationsachse 500 verläuft parallel zur zweiten Rotationsachse 200. An zwei Positionen des Pendelrahmens 50 ist ein erster Seitenarm 25 befestigt. An dem ersten Seitenarm ist eine erste Verteilervorrichtung 22 befestigt. Die erste Verteilervorrichtung 22 ist mittig, bezogen auf die Längserstreckung des ersten Seitenarms, an dem ersten Seitenarm angeordnet. Die erste Verteilervorrichtung 22 weist eine Einlassöffnung auf, die mit einer Zuführleitung 21 verbunden ist. Die Zuführleitung 21 verläuft durch den ersten Ausleger 20 und ist verbunden mit einer Flüssigkeitsverbindung zu dem Fasswagen 90, so dass Düngemittel aus dem Fasswagen 90 durch die Zuführleitung 21 in die erste Verteilervorrichtung 22 gefördert werden kann. Die Verteilervorrichtung 22 weist mehrere Auslassöffnungen auf, an denen jeweils flexible Rohre (nicht vollständig gezeigt) angeschlossen sind. Die flexiblen Rohre werden an mehreren Positionen an dem ersten Seitenarm 25 befestigt. An dem ersten Seitenarm sind parallel angeordnete Blattfedern 32 befestigt, an denen die flexiblen Rohre ebenfalls befestigt sind. Am unteren Ende der Blattfedern sind Schleppschuhe 24 mit den Blattfedern verbunden. Die flexiblen Rohre sind mit den Schleppschuhen 24 verbunden. So kann das Düngemittel aus den Auslassöffnungen der Verteilervorrichtung 22 durch die flexiblen Rohre zu den Schleppschuhen 24 befördert werden und aus den Schleppschuhen 24 bodennah ausgebracht werden. Die Schleppschuhe 24 besitzen einen speziellen Auslass und robuste Kufen, damit sie den Pflanzenbestand teilen und beim Fahren eine leichte Rinne in den Boden graben können.

Der erste Seitenarm 25 ist um eine dritte Rotationsachse 300 drehbar an dem ersten Pendelrahmen 50 gelagert. Eine Rotation des ersten Seitenarms 25 um die dritte Rotationsachse 300 wird durch Ein- und Ausfahren des ersten Seitenarmaktuators 81 und des zweiten Seitenarmaktuators 82 bewirkt. Dabei sind in der gezeigten Ausführungsform der erste und der zweite Seitenarmaktuator 81, 82 jeweils als Hydraulikzylinder ausgebildet. Der erste und der zweite Seitenarmaktuator 81, 82 sind dabei beide jeweils mit einem ersten Ende mit dem ersten Pendelrahmen 50 verbunden und um eine erste Seitenarmaktuatorrotationsachse 800b drehbar gelagert und mit einem zweiten Ende mit dem ersten Seitenarm 25 verbunden und um eine zweite Seitenarmaktuatorrotationsachse 800a drehbar gelagert. Durch ein Ein- und Ausfahren der Seitenarmaktuatoren 81, 82 wird eine Rotation des ersten Seitenarms 25 um die dritte Rotationsachse 300 bewirkt. Damit kann der erste Seitenarm 25 durch Ein- bzw. Ausfahren der Seitenarmaktuatoren 81, 82 um die dritte Rotationsachse 300 verschwenkt werden. Dabei wird zwischen der Transportposition und der Betriebsposition vorzugsweise eine Rotation des ersten Seitenarms 25 um die dritte Rotationsachse 300 um ca. 65° ausgeführt. In der in Figur 1a gezeigten Betriebsposition ist die dritte Rotationsachse 300 parallel zur Querrichtung B bzw. quer zur Fahrtrichtung und parallel zur ersten Rotationsachse 100 angeordnet.

Die gezeigte Vorrichtung ist mit zwei bezüglich des Tragrahmens 10 symmetrisch angeordneten Auslegern gezeigt. Dabei sind die oben beschriebenen Bauteile symmetrisch zu diesen auf der anderen Seite des Tragrahmens 10 angeordnet. Gezeigt ist ein zweiter Ausleger 20c, der sich analog zu dem ersten Ausleger bewegen lässt. Der erste Ausleger 20 und der zweite Ausleger 20c können unabhängig voneinander gesteuert werden. Mit dem Tragrahmen 10 ist der zweite Ausleger 20c verbunden und um eine vierte Rotationsachse 400 drehbar an dem Tragrahmen 10 gelagert. Durch den zweiten Ausleger 20c verläuft eine zweite Zuführleitung 21c, die mit einer zweiten Verteilvorrichtung 22c verbunden ist. An der zweiten Verteilvorrichtung 22c sind mehrere flexible Rohre (nicht gezeigt) verbunden, die entlang eines zweiten Seitenarms 25c an diesem befestigt sind und mit den Enden jeweils an Schleppschuhen 24c befestigt sind. Die Bauteile und Bewegungsmöglichkeiten dieser Bauteile sind analog zu den im Detail beschriebenen Bauteilen auf der anderen Seite des Tragrahmens 10 ausgebildet. Die Bewegungen des ersten und zweiten Seitenarms 25, 25c, des ersten und zweiten Pedelrahmens 50, 50c sowie des ersten und zweiten Auslegers 20, 20c können dabei gleichzeitig und symmetrisch oder unabhängig voneinander ausgeführt werden.

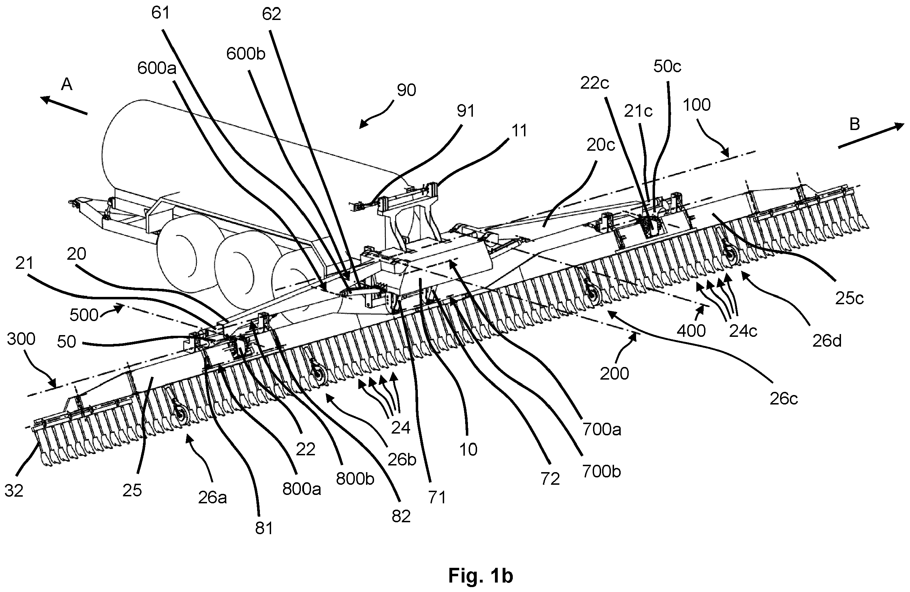

Figur 1b zeigt eine Ausführungsform der Vorrichtung, bei der an dem ersten Seitenarm zwei Räder 26a, 26b befestigt sind, die den gleichen Abstand zur Pendelrotationsachse aufweisen und den Seitenarm zusätzlich zu den Schleppschuhen am Boden abstützen. Mit derartigen Rädern kann ein Einstellen des Abstands zwischen dem ersten Seitenarm und dem Boden erzielt werden. Am zweiten Seitenarm 25c sind ebenfalls zwei Räder 26c, 26d befestigt.

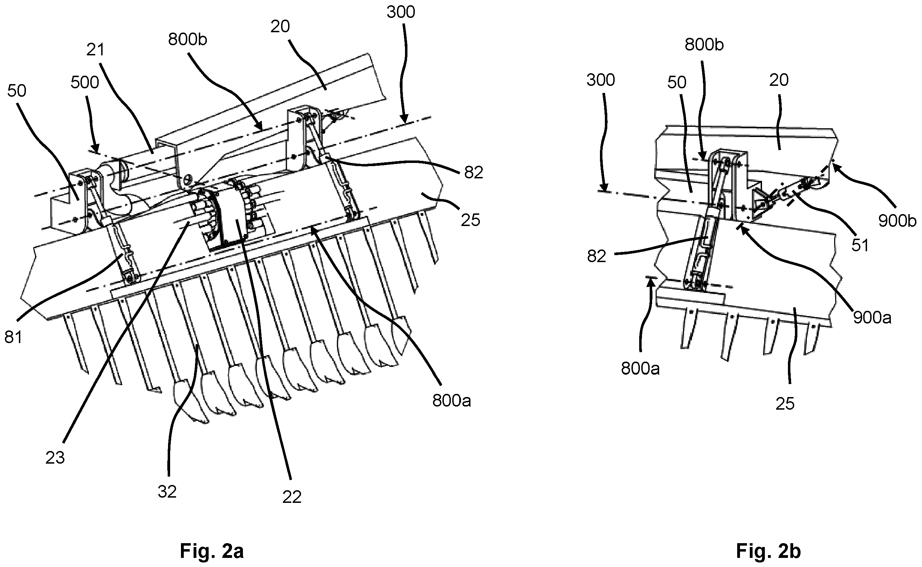

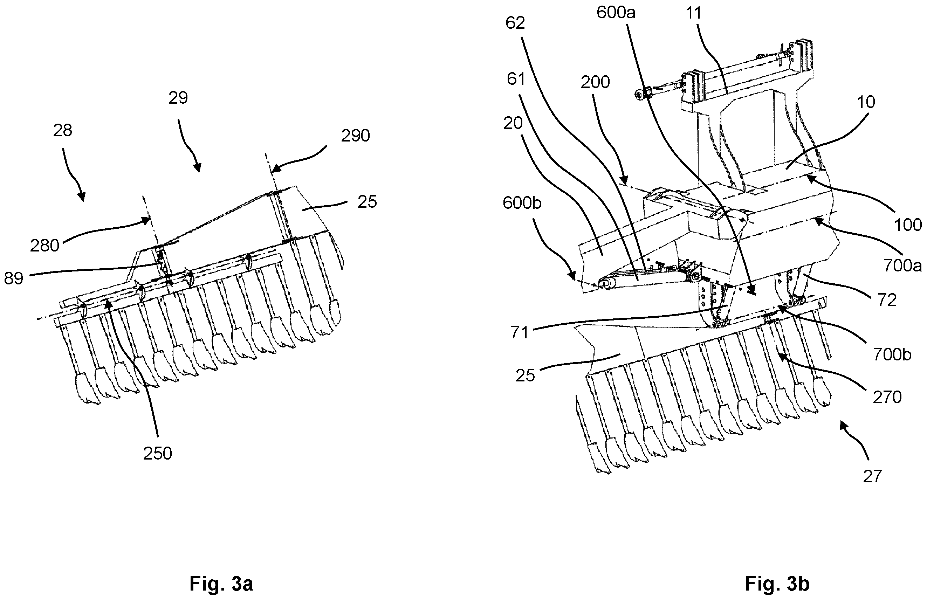

In den Figuren 2a, 2b, 3a und 3b sind Detailansichten der Vorrichtung gezeigt.

In Figur 2a ist der erste Ausleger 20 gezeigt, der über ein Gelenk im Bereich der Pendelrotationsachse 500 drehbar mit dem Pendelrahmen 50 verbunden ist. Die Zuführleitung 21 verläuft durch den ersten Ausleger 20. Die Zuführleitung 21 weist dabei ein Drehgelenk auf, das eine Rotation der Zuführleitung 21 in diesem Bereich um die dritte Rotationsachse 300 ermöglicht. Die flexiblen Rohre 23 sind ausgehend von der ersten Verteilervorrichtung 22 in dieser Ansicht angedeutet.

In Figur 2b ist ein Pendelrahmenaktuator 51 gezeigt, der ein erstes und ein zweites Ende aufweist, wobei das erste Ende mit dem ersten Ausleger verbunden und um eine erste Pendelrahmenaktuatorrotationsachse 900b drehbar gelagert ist und das zweite Ende mit dem Pendelrahmen verbunden und um eine zweite Pendelrahmenaktuatorrotationsachse 900a drehbar gelagert ist, wobei der Pendelrahmenaktuator 51 angeordnet ist, um durch Ein- und Ausfahren des Pendelrahmenaktuators 51 eine Rotation des Pendelrahmens 50 um die Pendelrotationsachse zu bewirken. Der Pendelrahmenaktuator 51 ist ausgebildet als Hydraulikzylinder. Durch Ein- und Ausfahren des Pendelrahmenaktuators kann insbesondere der erste Seitenarm 25 um die Pendelrotationsachse relativ zum ersten Ausleger bewegt werden.

In Figur 3a sind zwei äußere Teilsegmente bzw. Endsegmente 28, 29 des ersten Seitenarms in ausgeklappter Stellung gezeigt. Durch Ausklappen dieser Teilsegmente 28, 29 kann die maximale Arbeitsbreite der Vorrichtung erreicht werden. Das erste Endsegment 29 ist mit dem ersten Seitenarm 25 verbunden und um eine erste Endsegmentrotationsachse 290 drehbar an dem ersten Seitenarm gelagert. Das zweite Endsegment 28 ist mit dem ersten Endsegment 29 verbunden und um eine zweite Endsegmentrotationsachse 280 drehbar an dem ersten Endsegment 29 gelagert.

Weiter ist in Figur 3a ein Endsegmentaktuator 89 gezeigt, der ein erstes und ein zweites Ende aufweist, wobei das erste Ende mit dem ersten Seitenarm verbunden und um eine erste Endsegmentaktuatorrotationsachse drehbar gelagert ist und das zweite Ende mit dem zweiten Endsegment 29 verbunden und um eine zweite Endsegmentaktuatorrotationsachse drehbar gelagert, wobei der Endsegmentaktuator 89 angeordnet ist, um durch Ein- und Ausfahren des Endsegmentaktuators 89 eine Rotation des ersten Endsegments 29 im eingeklappten Zustand und des zweiten Endsegments 28 im eingeklappten Zustand um eine vierte Endsegmentrotationsachse 250 zu bewirken, wobei die vierte Endsegmentrotationsachse 250 parallel zur dritten Rotationsachse 300 angeordnet ist.

In Figur 3b ist eine Detailansicht im Bereich des Tragrahmens gezeigt. Dabei ist ein drittes Endsegment 27 gezeigt, das mit dem ersten Seitenarm 25 verbunden und um eine dritte Endsegmentrotationsachse 270 drehbar an dem ersten Seitenarm 25 gelagert ist. Dadurch kann erreicht werden, dass in der Transportstellung das dritte Endsegment 27 um 90° zum ersten Seitenarm 25 verstellt wird, damit das dritte Endsegment nicht absteht und möglichst nah am Behälter angeordnet ist. Ein solches Verschwenken des dritten Endsegments 27 wird durch einen Aktuator, vorzugsweise in Form eines Hydraulikzylinders, bewirkt.

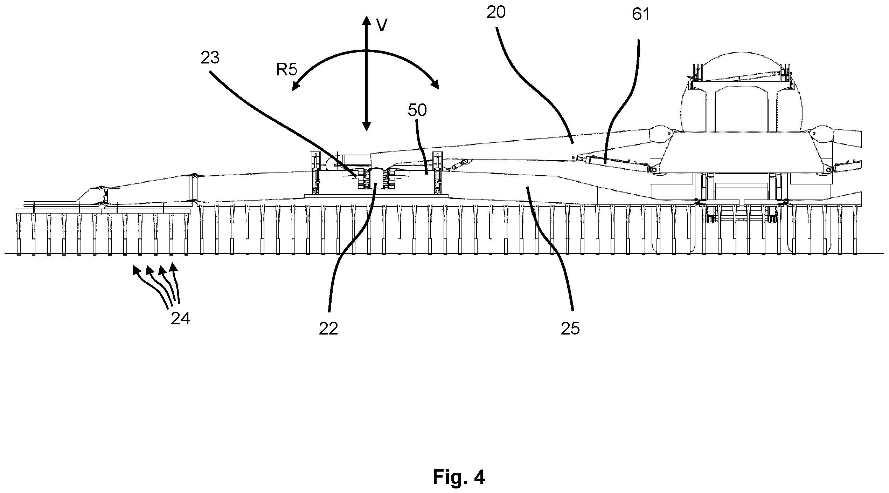

In Figur 4 sind zwei Bewegungsmöglichkeiten des ersten Seitenarms 25 gezeigt. Dabei kann der erste Seitenarm 25 durch Rotation des ersten Auslegers 20 um die zweite Rotationsachse 200, welche durch Ein- und Ausfahren des ersten Auslegeraktuators bewirkt wird, in vertikaler Richtung V verstellt werden. Außerdem kann der erste Seitenarm durch die Pendelaufhängung mit dem Pendelrahmen 50 um die Pendelrotationsachse 500 bewegt werden. Die Pendelrotationsachse 500 befindet sich dabei über dem Schwerpunkt des ersten Seitenarms. Dadurch wird ein stabiles Pendeln R5 des ersten Seitenarms 25 ermöglicht. So kann sich die Lage des ersten Seitenarms 25 um die Pendelrotationsachse 500 stets an die aktuelle Bodenkontur anpassen. Damit wird eine gleichmäßige bodennahe Ausbringung des Düngemittels über die gesamte Breite des ersten Seitenarms ermöglicht. Des Weiteren sind die flexiblen Rohre 23 in dieser Ansicht angedeutet, durch die das Düngemittel von der Verteilervorrichtung 22 zu den Schleppschuhen 24 gefördert werden kann. Die Bewegungen V und R5 des ersten Seitenarms 25 beeinflussen dabei nicht den Winkel der Schleppschuhe 24 zum Boden, sodass die Auslassöffnung der Schleppschuhe möglichst parallel zum Boden geführt wird.

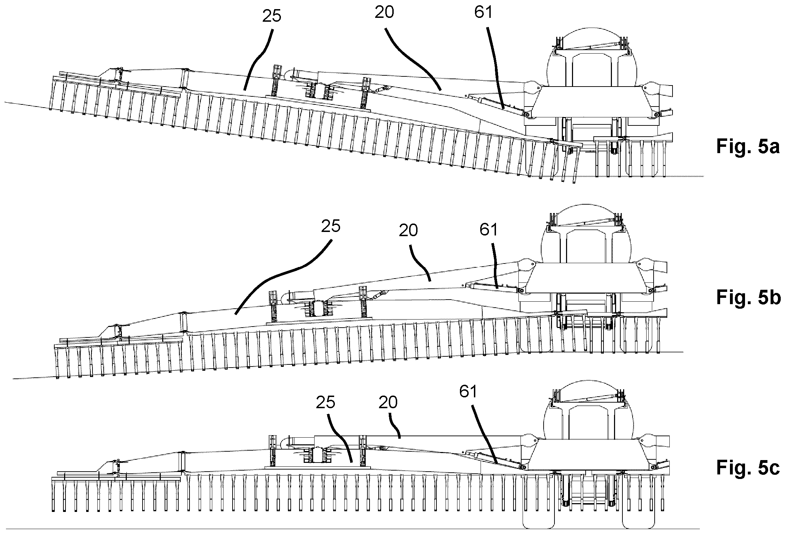

Verschiedene Bodenanpassungen des ersten Seitenarms 25 und des ersten Auslegers 20 sind in den Figuren 5a und 5b gezeigt. Im Fall einer nach außen hin ansteigenden Bodenkontur, wie in Fig. 5a gezeigt, wird der erste Ausleger 20 mit dem ersten Seitenarm 25 in vertikaler Richtung V nach oben bewegt. Zusätzlich erfolgt eine Pendelbewegung R5. Im Fall einer nach außen hin abfallender Bodenkontur, wie in Fig. 5b gezeigt, wird der erste Ausleger 20 mit dem ersten Seitenarm 25 in vertikaler Richtung V nach unten bewegt. Zusätzlich erfolgt eine Pendelbewegung R5. Bei Bedarf können die als Hydraulikzylinder ausgebildeten Auslegeraktuatoren 61, 62 in eine Schwimmstellung geschaltet werden, so dass sich die Vorrichtung der Bodenkontur automatisch anpasst, ohne dass dabei eine weitere Steuerung notwendig ist. Dabei kann der Pendelrahmenaktuator 51 ebenfalls in eine Schwimmstellung geschaltet werden. Mit einer solchen Schwimmstellung kann eine optimale Bodenanpassung - auch bei veränderlichen Bodenkonturen - erreicht werden. Außerdem werden in der Schwimmstellung an dem Seitenarm verbundene Räder, die in der Betriebsposition Kontakt mit dem Boden haben, entlastet, sofern Räder vorhanden sind (wie z.B. in der in Figur 1b gezeigten Ausführungsform). Sind keine Räder vorhanden (wie z.B. in der in Figur 1a gezeigten Ausführungsform), kann ohne Abstützung durch die Räder eine schwimmende Lagerung des ersten Auslegers 20 und des ersten Seitenarms 25 erfolgen.

In Figur 5c ist ein Abheben der Schleppschuhe vom Boden gezeigt, indem der erste Ausleger 20 mit dem ersten Seitenarm 25 in vertikaler Richtung V nach oben bewegt wird.

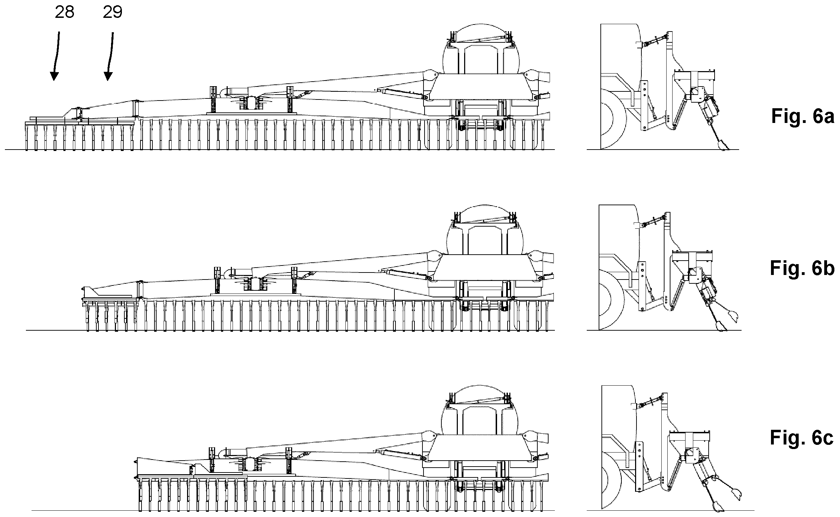

In der Figur 6a ist gezeigt, dass zwei äußere Teilsegmente 28, 29 des ersten Seitenarms ausgeklappt sind. Durch Ausklappen dieser Teilsegmente 28, 29 kann die maximale Arbeitsbreite der Vorrichtung erreicht werden. In Figur 6b ist ein Zustand gezeigt, in dem das äußere Teilsegment 28 eingeklappt ist, für eine reduzierte Arbeitsbreite. Figur 6c zeigt einen Zustand, in dem außerdem das weitere Teilsegment 29 ebenfalls eingeklappt ist, so dass die Arbeitsbreite noch weiter reduziert ist. Dadurch kann die Arbeitsbreite den aktuellen Anfordernissen entsprechend angepasst werden. Durch Einklappen des Teilsegments 29 wird das damit verbundene Teilsegment 28 mitbewegt, sodass durch Einklappen des Teilsegments 29 beide Teilsegmente 28, 29 eingeklappt werden können. Ausgehend von der vollen Arbeitsbreite mit ausgeklappten Teilsegmenten 28, 29 werden diese Teilsegmente mit einer Rotationsbewegung vom Boden wegbewegt, sodass die Schleppschuhe in der eingeklappten Stellung (siehe Figur 6b und Figur 6c) um 180° gedreht, vom Boden abgehoben und in Bezug auf die Längsrichtung A hinter den sich am Boden befindlichen Schleppschuhen angeordnet sind.

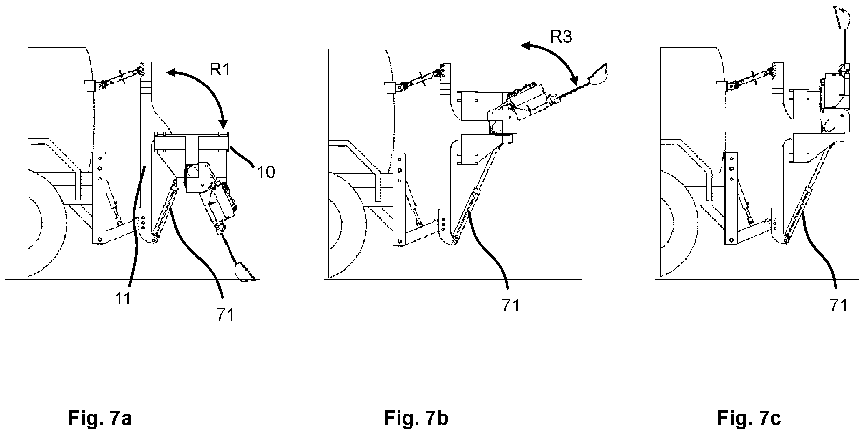

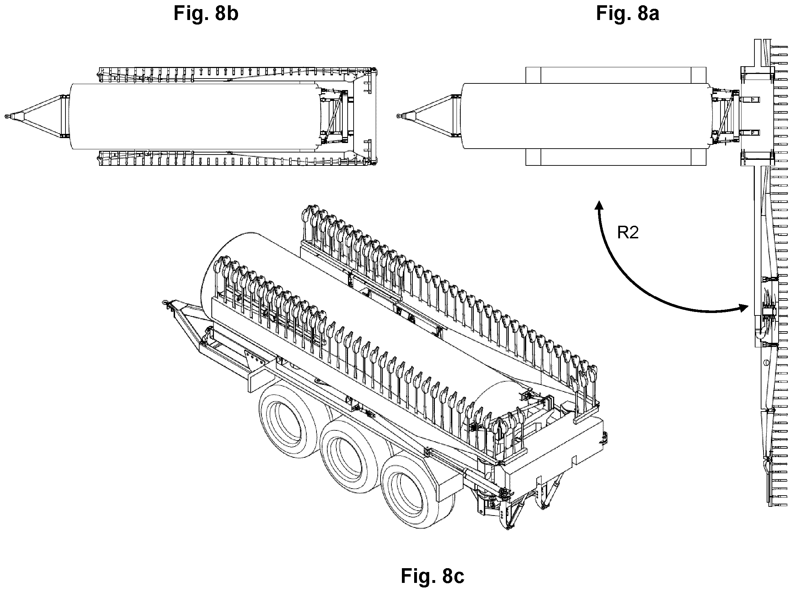

Das Verstellen von der Betriebsposition in die Transportposition, also das Einklappen, wird anhand der Figuren 7a, 7b, 7c, 8a und 8b, in dieser Reihenfolge der Figuren, beschrieben.

Dabei ist zu verstehen, dass die nachfolgend beschriebene Klappreihenfolge von der Betriebsposition in umgekehrter Reihenfolge ausgeführt wird, um das Schleppschuhgestänge von der Transportposition in die Betriebsposition zu bringen, also auszuklappen.

Zu Beginn des Einklappvorgangs kann der Ausleger durch eine geringe Ausfahrbewegung des Auslegeraktuators 61 um die zweite Rotationsachse, die horizontal liegt, nach oben verschwenkt und dadurch der Seitenarm etwas angehoben werden, um die Schleppschuhe vom Boden abzuheben. Hierdurch wird etwa die in Fig. 5c dargestellte Position erreicht.

In Figur 7a ist die Vorrichtung in einer Seitenansicht in der Betriebsposition gezeigt. Die zweite Rotationsachse ist horizontal angeordnet. Durch eine Rotation des Tragrahmens 10 um die erste Rotationsachse 100 um ca. 90° bewegt sich der Tragrahmen 10 in der eingezeichneten Richtung R1. Diese Rotationsbewegung wird durch Ausfahren der Tragrahmenaktuatoren 71, 72 bewirkt. Durch eine solche Rotationsbewegung wird die in Fig. 7b gezeigte Position erreicht. Die zweite Rotationsachse ist dann vertikal angeordnet.

Durch eine Rotation des ersten Seitenarms 25 um die dritte Rotationsachse 300 um ca. 65° bewegt sich der erste Seitenarm 25 in der eingezeichneten Richtung R3. Diese Rotationsbewegung wird durch Einfahren der Seitenarmaktuatoren 81, 82 bewirkt. Nach einer solchen Rotationsbewegung weisen die Öffnungen der Schleppschuhe nach oben. Möglich ist beispielsweise auch eine Rotation des ersten Seitenarms 25 um die dritte Rotationsachse 300 um ca. 70°, wobei die Schleppschuhe um 5° relativ zur vertikalen Richtung in Richtung des Behälters geneigt sind.

Alternativ kann beim Einklappvorgang auch die Rotation des ersten Seitenarms 25 um die dritte Rotationsachse 300 vor der Rotation des des Tragrahmens 10 um die erste Rotationsachse 100 erfolgen - bzw. beim Ausklappvorgang entsprechend umgekehrt. Dies ist insbesondere bei Schleppschuhgestängen mit großer Ausbringbreite vorteilhaft, um ein mechanisch schonendes Einklappen und Ausklappen zu erreichen.

In Figur 8a ist eine Ansicht der Vorrichtung von oben gezeigt. Dabei befinden sich die Bauteile in der in Figur 7a gezeigten Position.

Durch eine Rotation des ersten Auslegers 20 um die zweite Rotationsachse 200, wenn diese vertikal orientiert ist, kann der erste Ausleger 20 in der eingezeichneten Richtung R2 verschwenkt werden. Diese Rotationsbewegung wird durch Ausfahren der Auslegeraktuatoren 61, 62 bewirkt. Durch ein solches Verschwenken des ersten Auslegers 20 um die zweite Rotationsachse 200 um ca. 98° kann der erste Ausleger in die Transportposition bewegt werden.

Außerdem wird durch eine Rotation des Pendelrahmens 50 um die Pendelrotationsachse 500 der Pendelrahmen an den Ausleger geklappt. Diese Rotationsbewegung wird durch Einfahren des Pendelrahmenaktuators 51 bewirkt.

Zusätzlich werden die äußeren Teilsegmente 28, 29 durch eine Rotation um die zweite Endsegmentrotationsachse 290 um 180° geklappt und das dritte Endsegment 27 durch Rotation um die dritte Endsegmentrotationsachse 270 um 90° bewegt.

Die dann eingestellte Transportposition ist in Figur 8b sowie in Figur 8c dargestellt. In dieser Position kann die Vorrichtung platzsparend transportiert werden.

## Patentansprüche

1. Vorrichtung zum Ausbringen eines pumpfähigen Mediums, insbesondere eines Düngemittels wie Gülle, auf einen Streifen einer landwirtschaftlichen Nutzfläche, umfassend
- einen Hinterrahmenhalter (11) mit einer Hinterrahmenhalterschnittstelle zur Befestigung an einem Hinterrahmen (91) eines Behälters, insbesondere an einem Güllefass;
- einen Tragrahmen (10), der um eine erste Rotationsachse (100), die sich in einer Querrichtung (B) erstreckt, drehbar an dem Hinterrahmenhalter (11) gelagert ist;
- einen ersten Ausleger (20), der sich in einer Betriebsposition in der Querrichtung (B) erstreckt und mit dem Tragrahmen (10) verbunden und um eine zweite Rotationsachse (200) drehbar an dem Tragrahmen (10) gelagert ist;
- einen an dem ersten Ausleger (20) befestigten ersten Seitenarm (25), der sich in einer Seitenarmlängsrichtung erstreckt und an dem mehrere entlang des ersten Seitenarms (25) angeordnete Schleppschlauchausleger (24) angeordnet sind, die voneinander in der Seitenarmlängsrichtung beabstandet sind und an ihren Enden jeweils eine Austrittsöffnung aufweisen;
wobei der erste Seitenarm (25) zwischen
- der Betriebsposition, in welcher der erste Seitenarm (25) sich in der Querrichtung (B) erstreckt und die Schleppschlauchausleger (24) sich ausgehend von dem ersten Seitenarm (25) nach unten erstrecken, und
- einer Transportposition, in welcher der erste Seitenarm (25) sich in einer quer zur Querrichtung (B) liegenden Längsrichtung (A) erstreckt und die Schleppschlauchausleger (24) sich ausgehend von dem ersten Seitenarm (25) nach oben erstrecken,
verstellbar ist,
- wobei die erste und die zweite Rotationsachse (100, 200) so verlaufen, dass die Verstellung zwischen der Betriebsposition und der Transportposition durch eine Rotation des Tragrahmens (10) um die erste Rotationsachse (100) mit einem ersten Winkelbetrag und eine Rotation des ersten Auslegers (20) um die zweite Rotationsachse (200) mit einem zweiten Winkelbetrag erfolgt,
**dadurch gekennzeichnet, dass** die zweite Rotationsachse (200) in der Betriebsposition horizontal angeordnet ist,
wobei die Vorrichtung einen Seitenarmaktuator (81) umfasst, der ein erstes und ein zweites Ende aufweist, wobei das erste Ende mit dem ersten Ausleger (20) verbunden und um eine erste Seitenarmaktuatorrotationsachse (800b) drehbar gelagert ist und das zweite Ende mit dem ersten Seitenarm verbunden und um eine zweite Seitenarmaktuatorrotationsachse (800a) drehbar gelagert ist, wobei der Seitenarmaktuator (81) angeordnet ist, um durch Ein- und Ausfahren des Seitenarmaktuators (81) eine Rotation des ersten Seitenarms (25) um eine dritte Rotationsachse (300), die sich parallel zum ersten Seitenarm (25) erstreckt, zu bewirken und damit den ersten Seitenarm (25) zwischen der Transportposition und der Betriebsposition durch Ein- und Ausfahren des Seitenarmaktuators (81) um die dritte Rotationsachse (300) um einen dritten Winkelbetrag zu verschwenken.

2. Vorrichtung nach Anspruch 1, umfassend
einen Auslegeraktuator (61), der ein erstes und ein zweites Ende aufweist, wobei das erste Ende mit dem Tragrahmen (10) verbunden und um eine erste Auslegeraktuatorrotationsachse (600b) drehbar gelagert ist und das zweite Ende mit dem ersten Ausleger (20) verbunden und um eine zweite Auslegeraktuatorrotationsachse (600a) drehbar gelagert ist, wobei der Auslegeraktuator (61) angeordnet ist, um durch Aus- und Einfahren des Auslegeraktuators (61) eine Rotation des ersten Auslegers (20) um die zweite Rotationsachse (200) zu bewirken, und damit
- in der Betriebsposition den ersten Seitenarm (25) in vertikaler Richtung zu verstellen, und
- den ersten Ausleger (20) zwischen der Transportposition und der Betriebsposition durch Ein- bzw. Ausfahren des Auslegeraktuators (61) um den zweiten Winkelbetrag um die zweite Rotationsachse (200) zu verschwenken, wobei der zweite Winkelbetrag vorzugsweise 80° bis 120°, besonders bevorzugt 93° - 103° und insbesondere ca. 98° beträgt.

3. Vorrichtung nach einem der vorhergehenden Ansprüche, umfassend
einen Tragrahmenaktuator (71), der ein erstes und ein zweites Ende aufweist, wobei das erste Ende mit dem Hinterrahmenhalter (11) verbunden und um eine erste Tragrahmenaktuatorrotationsachse (700b) drehbar gelagert ist und das zweite Ende mit dem Tragrahmen (10) verbunden und um eine zweite Tragrahmenaktuatorrotationsachse (700a) drehbar gelagert ist, wobei der Tragrahmenaktuator (71) angeordnet ist, um durch Ein- und Ausfahren des Tragrahmenaktuators (71) eine Rotation des Tragrahmens (10) um die erste Rotationsachse (100) zu bewirken und damit
- den Tragrahmen (10) zwischen der Transportposition und der Betriebsposition durch Ein- bzw. Ausfahren des Tragrahmenaktuators (71) um den ersten Winkelbetrag um die erste Rotationsachse (100) zu verschwenken, wobei der erste Winkelbetrag vorzugsweise 80° bis 120°, besonders bevorzugt 85° - 95° und insbesondere ca. 90° beträgt.

4. Vorrichtung nach einem der vorhergehenden Ansprüche,
- wobei der dritte Winkelbetrag 45° - 90°, besonders bevorzugt 60° - 75° und insbesondere 65° - 70° beträgt.

5. Vorrichtung nach einem der vorhergehenden Ansprüche, wobei
der erste Seitenarm (25) um eine Pendelrotationsachse (500), die parallel zur zweiten Rotationsachse (200) verläuft, drehbar an dem ersten Ausleger (20) gelagert ist.

6. Vorrichtung nach dem vorhergehenden Anspruch, **gekennzeichnet durch** einen Pendelrahmen (50),
der den ersten Seitenarm (25) mit dem ersten Ausleger (20) schwenkbar verbindet, insbesondere an mindestens zwei Positionen mit dem ersten Seitenarm (25) und mittels einer drehbaren Verbindung mit dem ersten Ausleger (20) verbunden ist oder umgekehrt.

7. Vorrichtung nach Anspruch 6, wobei
- das erste Ende des Seitenarmaktuators (81) mit dem ersten Ausleger (20) verbunden ist, indem
∘ das erste Ende des Seitenarmaktuators (81) drehbar um die erste Seitenarmaktuatorrotationsachse (800b) mit dem Pendelrahmen (50) gekoppelt ist und
∘ oder Pendelrahmen (50) drehbar um die Pendelrotationsachse (500) mit dem ersten Seitenarm (25) oder dem ersten Ausleger (20) gekoppelt ist.

8. Vorrichtung nach einem der Ansprüche 6 oder 7, umfassend
einen Pendelrahmenaktuator (51), der ein erstes und ein zweites Ende aufweist, wobei das erste Ende mit dem ersten Ausleger (20) verbunden und um eine erste Pendelrahmenaktuatorrotationsachse (900b) drehbar gelagert ist und das zweite Ende mit dem Pendelrahmen (50) verbunden und um eine zweite Pendelrahmenaktuatorrotationsachse (900a) drehbar gelagert ist, wobei der Pendelrahmenaktuator (51) angeordnet ist, um durch Ein- und Ausfahren des Pendelrahmenaktuators (51) eine Rotation des Pendelrahmens (50), und vorzugsweise des ersten Seitenarms (25), um die Pendelrotationsachse (500) zu bewirken.

9. Vorrichtung nach Anspruch 3, soweit rückbezogen auf Anspruch 2, oder nach einem der Ansprüche 4-8 soweit rückbezogen auf Anspruch 3, soweit Anspruch 3 auf Anspruch 2 rückbezogen ist, umfassend
eine Steuerungsvorrichtung, die signaltechnisch mit dem Auslegeraktuator (61) und dem Tragrahmenaktuator (71) und vorzugsweise dem Seitenarmaktuator (81) und vorzugsweise dem Pendelrahmenaktuator (51) verbunden ist und ausgebildet ist, um ein Ein- und Ausfahren des Auslegeraktuators (61) und des Tragrahmenaktuators (71) und vorzugsweise des Seitenarmaktuators (81) und vorzugsweise des Pendelrahmenaktuators (51) unabhängig voneinander zu steuern.

10. Vorrichtung nach dem vorhergehenden Anspruch, wobei
- die Steuerungsvorrichtung ausgebildet ist, um den Auslegeraktuator (61) in einer Schwimmsteuerungsschaltung so anzusteuern, dass eine Gewichtskraft des Auslegers (20) und des daran montierten Seitenarms (25) und der daran gewichtskraftausübend montierten Bauteile kompensiert wird,
- und die Steuerungsvorrichtung vorzugsweise ausgebildet ist, um den Pendelrahmenaktuator (51) in einer Schwimmsteuerungsschaltung so anzusteuern, dass eine Gewichtskraft des Seitenarms (25) und der daran gewichtskraftausübend montierten Bauteile kompensiert wird.

11. Vorrichtung nach Anspruch 5 oder einem der Ansprüche 6-10, soweit rückbezogen auf Anspruch 5, wobei
sich der Schwerpunkt des ersten Seitenarms (25) und/oder der Schwerpunkt des ersten Seitenarms (25) mit den daran gewichtskraftausübend montierten Bauteilen in der Betriebsposition unterhalb der Pendelrotationsachse (500) befindet.

12. Vorrichtung nach einem der vorhergehenden Ansprüche, wobei
die zweite Rotationsachse (200) in der Transportposition in einer vertikalen Richtung verläuft.

13. Vorrichtung nach Anspruch 2 oder einem der Ansprüche 3-12, soweit rückbezogen auf Anspruch 2, umfassend
einen zweiten Auslegeraktuator (62), der ein erstes und ein zweites Ende aufweist, wobei das erste Ende mit dem Tragrahmen (10) verbunden und um eine Achse, die parallel zur ersten Auslegeraktuatorrotationsachse (600b) angeordnet ist, drehbar gelagert ist und das zweite Ende mit dem ersten Ausleger (20) verbunden und um eine Achse, die parallel zur zweiten Auslegeraktuatorrotationsachse (600a) angeordnet ist, drehbar gelagert ist, wobei der zweite Auslegeraktuator (62) angeordnet ist, um durch Aus- und Einfahren des Auslegeraktuators (62) eine Rotation des ersten Auslegers (20) um die zweite Rotationsachse (200) zu bewirken.

14. Vorrichtung nach einem der vorhergehenden Ansprüche, umfassend
- eine erste Verteilervorrichtung (22), mit einer Einlassöffnung und mehreren Auslassöffnungen, die mit dem ersten Seitenarm (25) verbunden ist und vorzugsweise in der Richtung entlang des ersten Seitenarms (25) mittig an dem ersten Seitenarm (25) angeordnet ist;
- eine Zuführleitung (21), die ein erstes Ende und ein zweites Ende aufweist, wobei das erste Ende ausgebildet ist zur Verbindung mit einer Versorgungsöffnung und das zweite Ende mit der Einlassöffnung der ersten Verteilervorrichtung (22) verbunden ist;
wobei die Zuführleitung (21) entlang des ersten Auslegers (20) an dem ersten Ausleger (20) befestigt ist und/oder von dem ersten Ausleger (20) umschlossen ist und/oder durch den als Hohlprofil ausgeführten ersten Ausleger (20) gebildet wird.

15. Vorrichtung nach dem vorhergehenden Anspruch, umfassend
mehrere Leitungen (23), vorzugsweise ausgebildet als flexible Rohre, wobei die Leitungen jeweils ein erstes Ende und ein zweites Ende aufweisen, wobei jeweils die ersten Enden mit den Auslassöffnungen der ersten Verteilervorrichtung (22) und die zweiten Enden mit den Schleppschlauchauslegern (24) verbunden sind.

16. Vorrichtung nach einem der vorhergehenden Ansprüche, wobei
der erste Ausleger (20) mehrere Auslegerarmabschnitte umfasst, die teleskopartig angeordnet und relativ zueinander verschiebbar sind, sodass die Länge des ersten Auslegers (20) veränderbar ist.

17. Vorrichtung nach einem der vorhergehenden Ansprüche, umfassend
- ein erstes Endsegment (29), das mit dem ersten Seitenarm (25) verbunden und um eine erste Endsegmentrotationsachse drehbar an dem ersten Seitenarm (25) gelagert ist,
- und vorzugsweise ein zweites Endsegment (28), das mit dem ersten Endsegment (29) verbunden und um eine zweite Endsegmentrotationsachse (280) drehbar an dem ersten Endsegment gelagert ist,
- und vorzugsweise ein drittes Endsegment (27), das mit dem ersten Seitenarm (25) verbunden und um eine dritte Endsegmentrotationsachse (270) drehbar an dem ersten Seitenarm (25) gelagert ist.

18. Vorrichtung nach dem vorhergehenden Anspruch, umfassend einen Endsegmentaktuator (89), der ein erstes und ein zweites Ende aufweist, wobei das erste Ende mit dem ersten Seitenarm (25) verbunden und um eine erste Endsegmentaktuatorrotationsachse drehbar gelagert ist und das zweite Ende mit dem ersten Endsegment (29) und/oder dem zweiten Endsegment (28) verbunden und um eine zweite Endsegmentaktuatorrotationsachse (280) drehbar gelagert ist, wobei der Endsegmentaktuator (89) angeordnet ist, um durch Ein- und Ausfahren des Endsegmentaktuators (89) eine Rotation des ersten Endsegments (29) und/oder des zweiten Endsegments (28) um eine vierte Endsegmentrotationsachse (250) zu bewirken, wobei die vierte Endsegmentrotationsachse (250) parallel zur dritten Rotationsachse (300) angeordnet ist.

19. Vorrichtung nach einem der Ansprüche 9-11 oder einem der Ansprüche 12-18, soweit rückbezogen auf einen der Ansprüche 9-11, umfassend
einen Sensor, der an dem ersten Seitenarm (25) oder an einem Schleppschlauchausleger (24) befestigt ist, zur Abtastung der Bodenkontur, wobei der Sensor ausgebildet ist die empfangenen Daten an die Steuerungsvorrichtung zu senden und die Steuerungsvorrichtung ausgebildet ist, um den Auslegeraktuator (61) so anzusteuern, dass der erste Seitenarm (25) in einem konstanten Abstand zur Bodenkontur geführt wird.

20. Vorrichtung nach einem der vorhergehenden Ansprüche, umfassend
- einen zweiten Ausleger (20c), der mit dem Tragrahmen (10) verbunden und um eine vierte Rotationsachse (400), die parallel zur zweiten Rotationsachse (200) angeordnet ist, drehbar an dem Tragrahmen (10) gelagert ist;
- einen an dem zweiten Ausleger (20c) befestigten zweiten Seitenarm (25c), an dem mehrere entlang des zweiten Seitenarms (25c) angeordnete Schleppschlauchausleger (24c) angeordnet sind, die voneinander in einer Längsrichtung des Auslegers (20c) beabstandet sind und an ihren Enden jeweils eine Austrittsöffnung aufweisen;
wobei der zweite Seitenarm zwischen
- der Betriebsposition, in welcher der zweite Seitenarm (25c) sich in der Querrichtung (B) erstreckt und die Schleppschlauchausleger sich ausgehend von dem zweiten Seitenarm (25c) nach unten erstrecken, und
- der Transportposition, in welcher der zweite Seitenarm (25c) sich in der Längsrichtung (A) erstreckt und die Schleppschlauchausleger (24) sich ausgehend von dem zweiten Seitenarm (25c) nach oben erstrecken,
- wobei die vierte Rotationsachse (400) so verläuft, dass die Verstellung zwischen der Betriebsposition und der Transportposition durch Rotation des zweiten Auslegers (20c) um die vierte Rotationsachse (400) mit dem zweiten Winkelbetrag erfolgt,
verstellbar ist,
wobei die vierte Rotationsachse (400) in der Betriebsposition horizontal angeordnet ist.

21. Verteileranordnung zum Ausbringen eines pumpfähigen Mediums, insbesondere eines Düngemittels wie Gülle, auf einen Streifen einer landwirtschaftlichen Nutzfläche umfassend
- ein Fahrzeug, insbesondere ein Selbstfahrer mit einem Behälter oder ein Zugfahrzeug mit einem mit dem Zugfahrzeug verbundenen Anhänger mit einem Behälter;
- einen an dem Behälter montierten Hinterrahmen (91);
- und eine Vorrichtung nach einem der vorhergehenden Ansprüche, die an dem Hinterrahmen (91) montiert ist.

22. Verfahren zum Einstellen einer Transportposition ausgehend von einer Betriebsposition für eine Vorrichtung nach einem der Ansprüche 1-20 zum Ausbringen eines pumpfähigen Mediums, insbesondere eines Düngemittels wie Gülle, auf einen Streifen einer landwirtschaftlichen Nutzfläche, wobei sich der Streifen in einer Längsrichtung erstreckt, wobei die Vorrichtung umfasst:
- einen Hinterrahmenhalter (11) mit einer Hinterrahmenhalterschnittstelle zur Befestigung an einem Hinterrahmen (91) eines Behälters, insbesondere an einem Güllefass;
- einen Tragrahmen (10), der um eine erste Rotationsachse, die sich in einer Querrichtung (B) quer zur Längsachse (A) erstreckt, drehbar an dem Hinterrahmenhalter (11) gelagert ist;
- einen ersten Ausleger (20), der mit dem Tragrahmen (10) verbunden und um eine zweite Rotationsachse (200) drehbar an dem Tragrahmen (10) gelagert ist;
- einen an dem ersten Ausleger (20) befestigten ersten Seitenarm (25), an dem mehrere entlang des ersten Seitenarms (25) angeordnete Schleppschlauchausleger (24) angeordnet sind, die voneinander in einer Längsrichtung des Auslegers (20) beabstandet sind und an ihren Enden jeweils eine Austrittsöffnung aufweisen;
mit den Schritten:
a) Rotieren des Tragrahmes (10) um die erste Rotationsachse (100) mit einem Winkelbetrag von vorzugsweise 80° bis 120°, besonders bevorzugt 85° - 95° und insbesondere ca. 90°;
b) Rotieren des ersten Auslegers (20) um die zweite Rotationsachse (200) mit einem Winkelbetrag von vorzugsweise 80° bis 120°, besonders bevorzugt 93° - 103° und insbesondere ca. 98°;
wobei Schritt a) vor Schritt b) erfolgt.

23. Verfahren nach dem vorhergehenden Anspruch, wobei der erste Seitenarm (25) um eine dritte Rotationsachse (300) drehbar an dem ersten Ausleger (20) gelagert ist, mit dem Schritt:
c) Rotieren des ersten Seitenarms (25) um die dritte Rotationsachse (300) mit einem Winkelbetrag von vorzugsweise 45° - 90°, besonders bevorzugt 60° - 75° und insbesondere 65° - 70°;
wobei vorzugsweise Schritt c) nach Schritt a) und vor Schritt b) erfolgt.

24. Verfahren nach Anspruch 22 oder 23, mit dem Schritt:
d) Rotieren des ersten Auslegers (20) um die zweite Rotationsachse (200), die horizontal angeordnet ist, mit einem Winkelbetrag von vorzugsweise 1° bis 30°, besonders bevorzugt 5° - 20° und insbesondere ca. 10°;
wobei Schritt d) vor Schritt a) erfolgt.

## Claims

1. Device for spreading a pumpable medium, in particular a fertilizer such as liquid manure, on a strip of agricultural land, comprising
- a rear frame holder (11) with a rear frame holder interface for attachment to a rear frame (91) of a container, in particular to a slurry tank;
- a support frame (10) which is mounted on the rear frame holder (11) so as to be rotatable about a first axis of rotation (100) extending in a transverse direction (B);
- a first boom (20), which extends in an operating position in the transverse direction (B) and is connected to the support frame (10) and is mounted on the support frame (10) so as to be rotatable about a second axis of rotation (200);
- a first side arm (25) attached to the first boom (20), which extends in a longitudinal direction of the side arm and on which a plurality of trailing hose booms (24) are arranged along the first side arm (25), which are spaced apart from one another in the longitudinal direction of the side arm and each have an outlet opening at their ends;
wherein the first side arm (25) is adjustable between
- the operating position, in which the first side arm (25) extends in the transverse direction (B) and the trailing hose booms (24) extend downwards from the first side arm (25), and
- a transport position, in which the first side arm (25) extends in a longitudinal direction (A) transverse to the transverse direction (B) and the trailing hose booms (24) extend upwards from the first side arm (25),
- wherein the first and second axes of rotation (100, 200) extend such that the adjustment between the operating position and the transport position is effected by a rotation of the support frame (10) about the first axis of rotation (100) with a first angular amount and a rotation of the first boom (20) about the second axis of rotation (200) with a second angular amount,
**characterized in that** the second axis of rotation (200) is arranged horizontally in the operating position,
wherein the apparatus comprises a side arm actuator (81) that has a first and a second end, wherein the first end is connected to the first boom (20) and mounted so as to be rotatable about a first side arm actuator axis of rotation (800b) and the second end is connected to the first side arm and mounted so as to be rotatable about a second side arm actuator axis of rotation (800a), wherein the side arm actuator (81) is arranged to effect a rotation of the first side arm (25) about a third axis of rotation (300), which extends parallel to the first side arm (25), by extending and retracting the side arm actuator (81), and thus to pivot the first side arm (25) between the transport position and the operating position by a third angular amount about the third axis of rotation (300) by extending and retracting the side arm actuator (81).

2. Device according to claim 1, comprising
a boom actuator (61) that has a first and a second end, wherein the first end is connected to the support frame (10) and mounted so as to be rotatable about a first boom actuator axis of rotation (600b) and the second end is connected to the first boom (20) and mounted so as to be rotatable about a second boom actuator axis of rotation (600a), wherein the boom actuator (61) is arranged to cause a rotation of the first boom (20) about the second axis of rotation (200) by extending and retracting the boom actuator (61), and thus
- to move the first side arm (25) in the vertical direction in the operating position, and
- to pivot the first boom (20) between the transport position and the operating position by extending or retracting the boom actuator (61) by the second angular amount about the second axis of rotation (200), wherein the second angular amount is preferably 80° to 120°, particularly preferably 93° - 103°, and in particular approximately 98°.

3. Device according to any one of the preceding claims, comprising
a support frame actuator (71) which has a first and a second end, wherein the first end is connected to the rear frame holder (11) and mounted rotatably about a first support frame actuator axis of rotation (700b) and the second end is connected to the support frame (10) and mounted so as to be rotatable about a second support frame actuator axis of rotation (700a), wherein the support frame actuator (71) is arranged to effect a rotation of the support frame (10) about the first axis of rotation (100) by extending and retracting the support frame actuator (71), and thus
- to pivot the support frame (10) between the transport position and the operating position by extending or retracting the support frame actuator (71) by the first angular amount about the first axis of rotation (100), wherein the first angular amount is preferably 80° to 120°, particularly preferably 85° - 95° and in particular approximately 90°.

4. Device according to one of the preceding claims,
- where the third angular amount is 45° - 90°, particularly preferably 60° - 75° and in particular 65° - 70°.

5. Device according to one of the preceding claims, wherein
the first side arm (25) is mounted on the first boom (20) so as to be rotatable about a pendulum axis of rotation (500), which runs parallel to the second axis of rotation (200).

6. Device according to the preceding claim, **characterized by** a pendulum frame (50),
which pivotably connects the first side arm (25) to the first boom (20), in particular is connected to the first side arm (25) at at least two positions and to the first boom (20) by means of a rotatable connection or vice versa.

7. Device according to claim 6, wherein
- the first end of the side arm actuator (81) is connected to the first boom (20) in that
∘ the first end of the side arm actuator (81) is coupled to the pendulum frame (50) so as to be rotatable about the first side arm actuator axis of rotation (800b), and
∘ the pendulum frame (50) is coupled to the first side arm (25) or the first boom (20) so as to be rotatable about the pendulum axis of rotation (500).

8. Device according to any one of claims 6 or 7, comprising
a pendulum frame actuator (51) that has a first and a second end, wherein the first end is connected to the first boom (20) and is mounted so as to be rotatable about a first pendulum frame actuator axis of rotation (900b) and the second end is connected to the pendulum frame (50) and is mounted so as to be rotatable about a second pendulum frame actuator axis of rotation (900a), wherein the pendulum frame actuator (51) is arranged to effect a rotation of the pendulum frame (50), and preferably of the first side arm (25), about the pendulum axis of rotation (500) by extending and retracting the pendulum frame actuator (51).

9. Device according to claim 3, insofar as it refers back to claim 2, or according to one of claims 4-8 insofar as it refers back to claim 3, insofar as claim 3 refers back to claim 2, comprising
a control device which is connected to the boom actuator (61) and the support frame actuator (71), and preferably the side arm actuator (81), and preferably the pendulum frame actuator (51), by means of signals and is adapted to control the extension and retraction of the boom actuator (61) and the support frame actuator (71), and preferably the side arm actuator (81), and preferably the pendulum frame actuator (51), independently of one another.

10. Device according to the preceding claim, wherein
- the control device is adapted to control the boom actuator (61) in a floating control circuit in such a way that a weight force of the boom (20) and the side arm (25) mounted thereon and the components mounted thereon exerting a weight force is compensated,
- and the control device is preferably adapted to control the pendulum frame actuator (51) in a floating control circuit in such a way that a weight force of the side arm (25) and the components mounted thereon exerting a weight force is compensated.

11. Device according to claim 5 or any one of claims 6-10, as far as referred back to claim 5, wherein
the center of gravity of the first side arm (25) and/or the center of gravity of the first side arm (25) with the components mounted thereon to exert a weight force is located below the pendulum axis of rotation (500) in the operating position.

12. Device according to one of the preceding claims, wherein
the second axis of rotation (200) runs in a vertical direction in the transport position.

13. Device according to claim 2 or any of claims 3-12, as far as referred back to claim 2, comprising
a second boom actuator (62) that has a first and a second end, wherein the first end is connected to the support frame (10) and mounted so as to be rotatable about an axis that is arranged parallel to the first boom actuator axis of rotation (600b), and the second end is connected to the first boom (20) and mounted so as to be rotatable about an axis that is arranged parallel to the second boom actuator axis of rotation (600a), , wherein the second boom actuator (62) is arranged to cause a rotation of the first boom (20) about the second axis of rotation (200) by extending and retracting the boom actuator (62).

14. Device according to any one of the preceding claims, comprising
- a first distributor device (22), that has an inlet opening and a plurality of outlet openings, which is connected to the first side arm (25) and is preferably arranged centrally on the first side arm (25) in the direction along the first side arm (25);
- a supply line (21) that has a first end and a second end, wherein the first end is adapted to be connected to a supply opening and the second end is connected to the inlet opening of the first distributor device (22);
wherein the supply line (21) is fastened along the first boom (20) to the first boom (20) and/or is enclosed by the first boom (20) and/or is formed by the first boom (20) designed as a hollow profile.

15. Device according to the preceding claim, comprising
a plurality of lines (23), preferably in the form of flexible pipes, wherein the lines each have a first end and a second end, wherein in each case the first ends are connected to the outlet openings of the first distributor device (22) and the second ends are connected to the trailing hose booms (24).

16. Device according to one of the preceding claims, wherein
the first boom (20) comprises several boom arm sections which are arranged telescopically and are displaceable relative to one another so that the length of the first boom (20) is variable.

17. Device according to any one of the preceding claims, comprising
- a first end segment (29), which is connected to the first side arm (25) and is mounted on the first side arm (25) so as to be rotatable about a first end segment axis of rotation,
- and preferably a second end segment (28), which is connected to the first end segment (29) and is mounted on the first end segment so as to be rotatable about a second end segment axis of rotation (280),
- and preferably a third end segment (27), which is connected to the first side arm (25) and is mounted on the first side arm (25) so as to be rotatable about a third end segment axis of rotation (270).

18. Device according to the preceding claim, comprising
an end segment actuator (89) that has a first and a second end, wherein the first end is connected to the first side arm (25) and mounted so as to be rotatable about a first end segment actuator axis of rotation and the second end is connected to the first end segment (29) and/or the second end segment (28) and mounted so as to be rotatable about a second end segment actuator axis of rotation (280), wherein the end segment actuator (89) is arranged to cause a rotation of the first end segment (29) and/or the second end segment (28) about a fourth end segment axis of rotation (250) by extending and retracting the end segment actuator (89), wherein the fourth end segment axis of rotation (250) is arranged parallel to the third axis of rotation (300).

19. Device according to any one of claims 9-11 or any one of claims 12-18, as far as referred back to any one of claims 9-11, comprising
a sensor, which is attached to the first side arm (25) or to a trailing hose boom (24), for sensing the ground contour, wherein the sensor is adapted to send the received data to the control device and the control device is adapted to control the boom actuator (61) in such a way that the first side arm (25) is guided at a constant distance from the ground contour.

20. Device according to any one of the preceding claims, comprising
- a second boom (20c), which is connected to the support frame (10) and is mounted on the support frame (10) so as to be rotatable about a fourth axis of rotation (400), which is arranged parallel to the second axis of rotation (200);
- a second side arm (25c) attached to the second boom (20c), on which a plurality of trailing hose booms (24c) arranged along the second side arm (25c) are arranged, which are spaced apart from one another in a longitudinal direction of the boom (20c) and each have an outlet opening at their ends;
wherein the second side arm is adjustable between
- the operating position in which the second side arm (25c) extends in the transverse direction (B) and the trailing hose booms extend downwards from the second side arm (25c), and
- the transport position, in which the second side arm (25c) extends in the longitudinal direction (A) and the trailing hose booms (24) extend upwards from the second side arm (25c),
- wherein the fourth axis of rotation (400) extends such that the adjustment between the operating position and the transport position is effected by rotation of the second boom (20c) about the fourth axis of rotation (400) with the second angular amount,
wherein the fourth axis of rotation (400) is arranged horizontally in the operating position.

21. Distributor arrangement for spreading a pumpable medium, in particular a fertilizer such as liquid manure, on a strip of agricultural land, comprising
- a vehicle, in particular a self-driving vehicle with a container or a towing vehicle with a trailer with a container connected to the towing vehicle;
- a rear frame (91) mounted on the container;
- and a device according to one of the preceding claims, which is mounted on the rear frame (91).

22. Method for setting a transport position starting from an operating position for a device according to any one of claims 1-20 for spreading a pumpable medium, in particular a fertilizer such as liquid manure, on a strip of agricultural land, the strip extending in a longitudinal direction, the device comprising:
- a rear frame holder (11) with a rear frame holder interface for attachment to a rear frame (91) of a container, in particular to a slurry tank;
- a support frame (10), which is mounted on the rear frame holder (11) so as to be rotatable about a first axis of rotation, which extends in a transverse direction (B) transverse to the longitudinal axis (A);
- a first boom (20), which is connected to the support frame (10) and is mounted on the support frame (10) so as to be rotatable about a second axis of rotation (200);
- a first side arm (25) attached to the first boom (20), on which a plurality of trailing hose booms (24) arranged along the first side arm (25) are arranged, which are spaced apart from one another in a longitudinal direction of the boom (20) and each have an outlet opening at their ends;
with the steps:
a) Rotating the support frame (10) about the first axis of rotation (100) with an angular amount of preferably 80° to 120°, particularly preferably 85° - 95°, and in particular approx. 90°;
b) rotating the first boom (20) about the second axis of rotation (200) with an angular amount of preferably 80° to 120°, particularly preferably 93° - 103°, and in particular approx. 98°;
wherein step a) is carried out before step b).

23. Method according to the preceding claim, wherein the first side arm (25) is mounted on the first boom (20) so as to be rotatable about a third axis of rotation (300), comprising the step:
c) rotating the first side arm (25) about the third axis of rotation (300) with an angular amount of preferably 45° - 90°, particularly preferably 60° - 75°, and in particular 65° - 70°;
wherein step c) is preferably carried out after step a) and before step b).

24. Method according to claim 22 or 23, comprising the step:
d) rotating the first boom (20) about the second axis of rotation (200), which is arranged horizontally, with an angular amount of preferably 1° to 30°, particularly preferably 5° - 20°, and in particular approx. 10°;
wherein step d) is carried out before step a).

## Revendications

1. Dispositif d'épandage d'un milieu pouvant être pompé, en particulier d'un engrais tel que du lisier, sur une bande d'une surface agricole utile, comprenant
- un élément de retenue de cadre arrière (11) avec une interface d'élément de retenue de cadre arrière pour la fixation à un cadre arrière (91) d'un contenant, en particulier à une tonne à lisier ;
- un cadre porteur (10), qui est logé au niveau de l'élément de retenue de cadre arrière (11) de manière rotative autour d'un premier axe de rotation (100), qui s'étend dans une direction transversale (B) ;
- une première flèche (20), qui s'étend dans une position de fonctionnement dans la direction transversale (B) et est reliée au cadre porteur (10) et logée au niveau du cadre porteur (10) de manière rotative autour d'un deuxième axe de rotation (200) ;
- un premier bras latéral (25) fixé à la première flèche (20), lequel s'étend dans une direction longitudinale de bras latéral et au niveau duquel plusieurs flèches de pendillards (24) agencées le long du premier bras latéral (25) sont disposées, qui sont espacées les unes des autres dans la direction longitudinale de bras latéral et présentent respectivement une ouverture de sortie au niveau de leurs extrémités ;
dans lequel le premier bras latéral (25) peut être réglé entre
- la position de fonctionnement, dans laquelle le premier bras latéral (25) s'étend dans la direction transversale (B) et les flèches de pendillards (24) s'étendent vers le bas à partir du premier bras latéral (25), et
- une position de transport, dans laquelle le premier bras latéral (25) s'étend dans une direction longitudinale (A) située transversalement à la direction transversale (B) et les flèches de pendillards (24) s'étendent vers le haut à partir du premier bras latéral (25),
- dans lequel le premier et le deuxième axe de rotation (100, 200) s'étendent de telle sorte que le réglage entre la position de fonctionnement et la position de transport se fait par une rotation du cadre porteur (10) autour du premier axe de rotation (100) selon une première valeur angulaire et une rotation de la première flèche (20) autour du deuxième axe de rotation (200) selon une deuxième valeur angulaire,
**caractérisé en ce que** le deuxième axe de rotation (200) est agencé de manière horizontale dans la position de fonctionnement,
dans lequel le dispositif comprend un actionneur de bras latéral (81), qui présente une première et une deuxième extrémité, dans lequel la première extrémité est reliée à la première flèche (20) et logée de manière rotative autour d'un premier axe de rotation d'actionneur de bras latéral (800b) et la deuxième extrémité est reliée au premier bras latéral et logée de manière rotative autour d'un deuxième axe de rotation d'actionneur de bras latéral (800a), dans lequel l'actionneur de bras latéral (81) est agencé de façon à provoquer par rétraction et déploiement de l'actionneur de bras latéral (81) une rotation du premier bras latéral (25) autour d'un troisième axe de rotation (300), qui s'étend parallèlement au premier bras latéral (25), et ainsi faire pivoter le premier bras latéral (25) entre la position de transport et la position de fonctionnement par rétraction et déploiement de l'actionneur de bras latéral (81) autour du troisième axe de rotation (300) d'une troisième valeur angulaire.

2. Dispositif selon la revendication 1, comprenant
un actionneur de flèche (61), qui présente une première et une deuxième extrémité, dans lequel la première extrémité est reliée au cadre porteur (10) et logée de manière rotative autour d'un premier axe de rotation d'actionneur de flèche (600b) et la deuxième extrémité est reliée à la première flèche (20) et logée de manière rotative autour d'un deuxième axe de rotation d'actionneur de flèche (600a), dans lequel l'actionneur de flèche (61) est agencé de façon à provoquer par déploiement et rétraction de l'actionneur de flèche (61) une rotation de la première flèche (20) autour du deuxième axe de rotation (200), et ainsi
- régler, dans la position de fonctionnement, le premier bras latéral (25) dans la direction verticale, et
- faire pivoter la première flèche (20) entre la position de transport et la position de fonctionnement par rétraction respectivement déploiement de l'actionneur de flèche (61) de la deuxième valeur angulaire autour du deuxième axe de rotation (200), dans lequel la deuxième valeur angulaire est de préférence de 80° à 120°, de manière particulièrement préférée de 93° - 103° et en particulier d'environ 98°.

3. Dispositif selon l'une quelconque des revendications précédentes, comprenant
un actionneur de cadre porteur (71), qui présente une première et une deuxième extrémité, dans lequel la première extrémité est reliée à l'élément de retenue de cadre arrière (11) et logée de manière rotative autour d'un premier axe de rotation d'actionneur de cadre porteur (700b) et la deuxième extrémité est reliée au cadre porteur (10) et logée de manière rotative autour d'un deuxième axe de rotation d'actionneur de cadre porteur (700a), dans lequel l'actionneur de cadre porteur (71) est agencé de façon à provoquer par rétraction et déploiement de l'actionneur de cadre porteur (71) une rotation du cadre porteur (10) autour du premier axe de rotation (100), et ainsi
- faire pivoter le cadre porteur (10) entre la position de transport et la position de fonctionnement par rétraction respectivement déploiement de l'actionneur de cadre porteur (71) de la première valeur angulaire autour du premier axe de rotation (100), dans lequel la première valeur angulaire est de préférence de 80° à 120°, de manière particulièrement préférée de 85° - 95° et en particulier d'environ 90°.

4. Dispositif selon l'une quelconque des revendications précédentes,
- dans lequel la troisième valeur angulaire est de 45° - 90°, de manière particulièrement préférée de 60° - 75° et en particulier de 65° - 70°.

5. Dispositif selon l'une quelconque des revendications précédentes, dans lequel
le premier bras latéral (25) est logé au niveau de la première flèche (20) de manière rotative autour d'un axe de rotation pendulaire (500), qui s'étend parallèlement au deuxième axe de rotation (200).

6. Dispositif selon la revendication précédente, **caractérisé par** un cadre pendulaire (50),
qui relie de manière pivotante le premier bras latéral (25) à la première flèche (20), en particulier est relié en au moins deux positions au premier bras latéral (25) et au moyen d'une liaison rotative à la première flèche (20) ou inversement.

7. Dispositif selon la revendication 6, dans lequel
- la première extrémité de l'actionneur de bras latéral (81) est reliée à la première flèche (20) par le fait que
∘ la première extrémité de l'actionneur de bras latéral (81) est couplée au cadre pendulaire (50) de manière rotative autour du premier axe de rotation d'actionneur de bras latéral (800b) et
∘ le cadre pendulaire (50) est couplé au premier bras latéral (25) ou à la première flèche (20) de manière rotative autour de l'axe de rotation pendulaire (500).

8. Dispositif selon l'une quelconque des revendications 6 ou 7, comprenant
un actionneur de cadre pendulaire (51), qui présente une première et une deuxième extrémité, dans lequel la première extrémité est reliée à la première flèche (20) et logée de manière rotative autour d'un premier axe de rotation d'actionneur de cadre pendulaire (900b) et la deuxième extrémité est reliée au cadre pendulaire (50) et logée de manière rotative autour d'un deuxième axe de rotation d'actionneur de cadre pendulaire (900a), dans lequel l'actionneur de cadre pendulaire (51) est agencé de façon à provoquer par rétraction et déploiement de l'actionneur de cadre pendulaire (51) une rotation du cadre pendulaire (50), et de préférence du premier bras latéral (25), autour de l'axe de rotation pendulaire (500).

9. Dispositif selon la revendication 3, pour autant qu'elle fasse référence à la revendication 2, ou selon l'une quelconque des revendications 4-8 pour autant qu'elle fasse référence à la revendication 3, pour autant que la revendication 3 fasse référence à la revendication 2, comprenant
un dispositif de commande, qui est relié du point de vue de la technique de signalisation à l'actionneur de flèche (61) et à l'actionneur de cadre porteur (71) et de préférence à l'actionneur de bras latéral (81) et de préférence à l'actionneur de cadre pendulaire (51) et est réalisé de façon à commander indépendamment l'un de l'autre une rétraction et un déploiement de l'actionneur de flèche (61) et de l'actionneur de cadre porteur (71) et de préférence de l'actionneur de bras latéral (81) et de préférence de l'actionneur de cadre pendulaire (51).

10. Dispositif selon la revendication précédente, dans lequel
- le dispositif de commande est réalisé de façon à amorcer l'actionneur de flèche (61) dans un circuit de commande à flotteur de telle sorte qu'un poids de la flèche (20) et du bras latéral (25) qui y est monté et des composants qui y sont montés en exerçant un poids est compensé,
- et le dispositif de commande est réalisé de préférence de façon à amorcer l'actionneur de cadre pendulaire (51) dans un circuit de commande à flotteur de telle sorte qu'un poids du bras latéral (25) et des composants qui y sont montés en exerçant un poids est compensé.

11. Dispositif selon la revendication 5 ou l'une quelconque des revendications 6-10, pour autant qu'elle fasse référence à la revendication 5, dans lequel
le centre de gravité du premier bras latéral (25) et/ou le centre de gravité du premier bras latéral (25) avec les composants qui y sont montés en exerçant un poids se trouve dans la position de fonctionnement en-dessous de l'axe de rotation pendulaire (500).

12. Dispositif selon l'une quelconque des revendications précédentes, dans lequel
le deuxième axe de rotation (200) s'étend dans la position de transport dans une direction verticale.

13. Dispositif selon la revendication 2 ou l'une quelconque des revendications 3-12, pour autant qu'elle fasse référence à la revendication 2, comprenant
un deuxième actionneur de flèche (62), qui présente une première et une deuxième extrémité, dans lequel la première extrémité est reliée au cadre porteur (10) et logée de manière rotative autour d'un axe, qui est agencé parallèlement au premier axe de rotation d'actionneur de flèche (600b), et la deuxième extrémité est reliée à la première flèche (20) et logée de manière rotative autour d'un axe, qui est agencé parallèlement au deuxième axe de rotation d'actionneur de flèche (600a), dans lequel le deuxième actionneur de flèche (62) est agencé de façon à provoquer par déploiement et rétraction de l'actionneur de flèche (62) une rotation de la première flèche (20) autour du deuxième axe de rotation (200).

14. Dispositif selon l'une quelconque des revendications précédentes, comprenant
- un premier dispositif de distribution (22), avec une ouverture d'entrée et plusieurs ouvertures de sortie, qui est relié au premier bras latéral (25) et est agencé de préférence dans la direction le long du premier bras latéral (25) au milieu du premier bras latéral (25) ;
- une conduite d'amenée (21), qui présente une première extrémité et une deuxième extrémité, dans lequel la première extrémité est réalisée pour la liaison à une ouverture d'alimentation et la deuxième extrémité est reliée à l'ouverture d'entrée du premier dispositif de distribution (22) ;
dans lequel la conduite d'amenée (21) le long de la première flèche (20) est fixée à la première flèche (20) et/ou est entourée par la première flèche (20) et/ou est formée par la première flèche (20) réalisée sous forme de profil creux.

15. Dispositif selon la revendication précédente, comprenant
plusieurs conduites (23), réalisées de préférence sous forme de tubes souples, dans lequel les conduites présentent respectivement une première extrémité et une deuxième extrémité, dans lequel respectivement les premières extrémités sont reliées aux ouvertures de sortie du premier dispositif de distribution (22) et les deuxièmes extrémités sont reliées aux flèches de pendillards (24).

16. Dispositif selon l'une quelconque des revendications précédentes, dans lequel
la première flèche (20) comprend plusieurs sections de bras de flèche, qui sont agencées de manière télescopique et déplaçables les unes par rapport aux autres de sorte que la longueur de la première flèche (20) est modifiable.

17. Dispositif selon l'une quelconque des revendications précédentes, comprenant
- un premier segment d'extrémité (29), qui est relié au premier bras latéral (25) et logé au niveau du premier bras latéral (25) de manière rotative autour d'un premier axe de rotation de segment d'extrémité,
- et de préférence un deuxième segment d'extrémité (28), qui est relié au premier segment d'extrémité (29) et logé au niveau du premier segment d'extrémité de manière rotative autour d'un deuxième axe de rotation de segment d'extrémité (280),
- et de préférence un troisième segment d'extrémité (27), qui est relié au premier bras latéral (25) et logé au niveau du premier bras latéral (25) de manière rotative autour d'un troisième axe de rotation de segment d'extrémité (270).

18. Dispositif selon la revendication précédente, comprenant
un actionneur de segment d'extrémité (89), qui présente une première et une deuxième extrémité, dans lequel la première extrémité est reliée au premier bras latéral (25) et logée de manière rotative autour d'un premier axe de rotation d'actionneur de segment d'extrémité et la deuxième extrémité est reliée au premier segment d'extrémité (29) et/ou au deuxième segment d'extrémité (28) et logée de manière rotative autour d'un deuxième axe de rotation d'actionneur de segment d'extrémité (280), dans lequel l'actionneur de segment d'extrémité (89) est agencé de façon à provoquer par rétraction et déploiement de l'actionneur de segment d'extrémité (89) une rotation du premier segment d'extrémité (29) et/ou du deuxième segment d'extrémité (28) autour d'un quatrième axe de rotation de segment d'extrémité (250), dans lequel le quatrième axe de rotation de segment d'extrémité (250) est agencé parallèlement au troisième axe de rotation (300).

19. Dispositif selon l'une quelconque des revendications 9-11 ou l'une quelconque des revendications 12-18, pour autant qu'elle fasse référence à l'une quelconque des revendications 9-11, comprenant
un capteur, qui est fixé au premier bras latéral (25) ou à une flèche de pendillards (24), pour le balayage du contour du sol, dans lequel le capteur est réalisé pour envoyer les données reçues au dispositif de commande et le dispositif de commande est réalisé de façon à amorcer l'actionneur de flèche (61) de telle sorte que le premier bras latéral (25) est guidé à une distance constante par rapport au contour du sol.

20. Dispositif selon l'une quelconque des revendications précédentes, comprenant
- une deuxième flèche (20c), qui est reliée au cadre porteur (10) et logée au niveau du cadre porteur (10) de manière rotative autour d'un quatrième axe de rotation (400), qui est agencé parallèlement au deuxième axe de rotation (200) ;
- un deuxième bras latéral (25c) fixé à la deuxième flèche (20c), au niveau duquel plusieurs flèches de pendillards (24c) agencées le long du deuxième bras latéral (25c) sont disposées, qui sont espacées les unes des autres dans une direction longitudinale de la flèche (20c) et présentent respectivement une ouverture de sortie au niveau de leurs extrémités ;
dans lequel le deuxième bras latéral peut être réglé entre
- la position de fonctionnement, dans laquelle le deuxième bras latéral (25c) s'étend dans la direction transversale (B) et les flèches de pendillards s'étendent vers le bas à partir du deuxième bras latéral (25c), et
- la position de transport, dans laquelle le deuxième bras latéral (25c) s'étend dans la direction longitudinale (A) et les flèches de pendillards (24) s'étendent vers le haut à partir du deuxième bras latéral (25c),
- dans lequel le quatrième axe de rotation (400) s'étend de telle sorte que le réglage entre la position de fonctionnement et la position de transport se fait par rotation de la deuxième flèche (20c) autour du quatrième axe de rotation (400) selon la deuxième valeur angulaire,
dans lequel le quatrième axe de rotation (400) est agencé de manière horizontale dans la position de fonctionnement.

21. Agencement de distribution pour l'épandage d'un milieu pouvant être pompé, en particulier d'un engrais tel que du lisier, sur une bande d'une surface agricole utile, comprenant
- un véhicule, en particulier un véhicule automoteur avec un contenant ou un véhicule tracteur avec une remorque dotée d'un contenant reliée au véhicule tracteur ;
- un cadre arrière (91) monté au niveau du contenant ;
- et un dispositif selon l'une quelconque des revendications précédentes, qui est monté au niveau du cadre arrière (91).

22. Procédé de réglage d'une position de transport à partir d'une position de fonctionnement pour un dispositif selon l'une quelconque des revendications 1-20 pour l'épandage d'un milieu pouvant être pompé, en particulier d'un engrais tel que du lisier, sur une bande d'une surface agricole utile, dans lequel la bande s'étend dans une direction longitudinale, dans lequel le dispositif comprend :
- un élément de retenue de cadre arrière (11) avec une interface d'élément de retenue de cadre arrière pour la fixation à un cadre arrière (91) d'un contenant, en particulier à une tonne à lisier ;
- un cadre porteur (10), qui est logé au niveau de l'élément de retenue de cadre arrière (11) de manière rotative autour d'un premier axe de rotation, qui s'étend dans une direction transversale (B) transversalement à l'axe longitudinal (A) ;
- une première flèche (20), qui est reliée au cadre porteur (10) et logée au niveau du cadre porteur (10) de manière rotative autour d'un deuxième axe de rotation (200) ;
- un premier bras latéral (25) fixé à la première flèche (20), au niveau duquel plusieurs flèches de pendillards (24) agencées le long du premier bras latéral (25) sont disposées, qui sont espacées les unes des autres dans une direction longitudinale de la flèche (20) et présentent respectivement une ouverture de sortie au niveau de leurs extrémités ;
avec les étapes de :
a) rotation du cadre porteur (10) autour du premier axe de rotation (100) selon une valeur angulaire de préférence de 80° à 120°, de manière particulièrement préférée de 85° - 95° et en particulier d'environ 90° ;
b) rotation de la première flèche (20) autour du deuxième axe de rotation (200) selon une valeur angulaire de préférence de 80° à 120°, de manière particulièrement préférée de 93° - 103° et en particulier d'environ 98° ;
dans lequel l'étape a) a lieu avant l'étape b).

23. Procédé selon la revendication précédente, dans lequel le premier bras latéral (25) est logé au niveau de la première flèche (20) de manière rotative autour d'un troisième axe de rotation (300), avec l'étape de :
c) rotation du premier bras latéral (25) autour du troisième axe de rotation (300) selon une valeur angulaire de préférence de 45° - 90°, de manière particulièrement préférée de 60° - 75° et en particulier de 65° - 70° ;
dans lequel de préférence l'étape c) a lieu après l'étape a) et avant l'étape b).

24. Procédé selon la revendication 22 ou 23, avec l'étape de :
d) rotation de la première flèche (20) autour du deuxième axe de rotation (200), qui est agencé de manière horizontale, selon une valeur angulaire de préférence de 1° à 30°, de manière particulièrement préférée de 5° - 20° et en particulier d'environ 10° ;
dans lequel l'étape d) a lieu avant l'étape a).
